# EUROPEAN PATENT APPLICATION

(11) **EP 4 600 059 A1**
(43) Date of publication of application: **13.08.2025**
(21) Application number: 23874855.2
(22) Date of filing: 03.10.2023
(51) Int. Cl.: B60J 7/02

(54) **SUNROOF APPARATUS**

(30) Priority: 04.10.2022 JP 2022160232
(71) Applicant: AISIN CORPORATION, Kariya-shi, Aichi 448-8650 (JP)
(72) Inventor: SAKATA Yusuke, Kariya-shi, Aichi 448-8650 (JP); SAKAMOTO Mizuki, Kariya-shi, Aichi 448-0857 (JP); TACHIBANA Yohsuke, Kariya-shi, Aichi 448-8650 (JP); SAWADA Kazuki, Kariya-shi, Aichi 448-8650 (JP); KAWAZU Aisei, Kariya-shi, Aichi 448-8650 (JP)
(74) Representative: TBK
(86) International application number: PCT/JP2023/036063
(87) International publication number: WO 2024/075728

(57) **Abstract**

A rear support part (100) of a sunroof apparatus (30) includes a first rear link (110) that rotates about an axis extending in a width direction, and a second rear link (140) that rotates about an axis extending in the width direction in a state of supporting a movable panel (40). The first rear link (110) rotates based on power transmitted from a power transmission member (200). The second rear link (140) displaces the movable panel (40) by rotating in accordance with rotation of the first rear link (110).

## Description

### TECHNICAL FIELD

The present disclosure relates to a sunroof apparatus.

### BACKGROUND ART

Patent Literature 1 describes a sunroof apparatus including a movable panel that covers a roof opening of a vehicle, a drive shoe that moves in a front-rear direction, a rear link that supports the movable panel from below, and a first stationary block and a second stationary block that support the rear link. In the sunroof apparatus, the rear link has a first slide shaft and a second slide shaft extending in a width direction. The first stationary block has a first slide groove on which the first slide shaft of the rear link slides, and the second stationary block has a second slide groove on which the second slide shaft of the rear link slides.

In the sunroof apparatus, when a force pushing the rear link rearward acts based on power transmitted from the drive shoe, the two slide shafts of the rear link slide on the two slide grooves. Then, the rear link rises, and a rear end portion of the movable panel is lifted up with respect to a front end portion of the movable panel. That is, the movable panel tilts up.

### CITATION LIST

### PATENT LITERATURE

Patent Literature 1: US 10,589,607

### SUMMARY OF INVENTION

### TECHNICAL PROBLEMS

In the sunroof apparatus as described above, it is necessary to provide at least one of the first slide groove or the second slide groove while tilting the slide groove with respect to a front-rear direction, in order to cause the rear link to rise when the rearward force acts. Therefore, at least one of the first stationary block or the second stationary block tends to be long in an up-down direction, and the thickness of the sunroof apparatus in the up-down direction tends to increase.

### SOLUTION TO PROBLEMS

A sunroof apparatus according to one aspect of the present disclosure includes: a movable panel configured to be displaced between a fully-closing position at which the movable panel fully closes a roof opening of a vehicle and a tilt-up position at which a rear end portion of the movable panel is lifted higher than the fully-closing position; a guide rail extending in a front-rear direction of the vehicle; a rear support part disposed at a position closer to a rear end than a front end of the guide rail, the rear support part supporting the movable panel; and a power transmission member configured to move in the front-rear direction along the guide rail, in which the rear support part includes: a first rear link configured to rotate about an axis extending in a width direction of the vehicle; and a second rear link configured to rotate about an axis extending in the width direction in a state of supporting the movable panel, the first rear link is configured to rotate based on power transmitted from the power transmission member, and the second rear link is configured to displace the movable panel by rotating in accordance with rotation of the first rear link.

### ADVANTAGEOUS EFFECTS OF INVENTION

In a sunroof apparatus, it is possible to reduce an increase in thickness thereof in an up-down direction.

### BRIEF DESCRIPTION OF DRAWINGS

FIG. 1 is a schematic view of a vehicle including a sunroof apparatus according to a first embodiment.
FIG. 2 is a plan view of the vehicle including the sunroof apparatus of FIG. 1.
FIG. 3 is a perspective view of a rear part of the sunroof apparatus of FIG. 1.
FIG. 4 is an exploded perspective view of the rear part of the sunroof apparatus of FIG. 1.
FIG. 5 is an exploded perspective view of the rear part of the sunroof apparatus of FIG. 1.
FIG. 6 is an exploded perspective view of the rear part of the sunroof apparatus of FIG. 1.
FIG. 7 is an exploded perspective view of the rear part of the sunroof apparatus of FIG. 1.
FIG. 8 is an exploded perspective view of a first rear link of the sunroof apparatus of FIG. 1.
FIG. 9 is a cross-sectional view at a time when a movable panel is arranged at a fully-closing position, in the sunroof apparatus of FIG. 1.
FIG. 10 is a cross-sectional view at the time when the movable panel is arranged at the fully-closing position, in the sunroof apparatus of FIG. 1.
FIG. 11 is a cross-sectional view while the movable panel is tilting up, in the sunroof apparatus of FIG. 1.
FIG. 12 is a cross-sectional view while the movable panel is tilting up, in the sunroof apparatus of FIG. 1.
FIG. 13 is a cross-sectional view at a time when the movable panel is arranged at a tilt-up position, in the sunroof apparatus of FIG. 1.
FIG. 14 is a cross-sectional view at the time when the movable panel is arranged at the tilt-up position, in the sunroof apparatus of FIG. 1.
FIG. 15 is an exploded perspective view of a rear part of a sunroof apparatus according to a second embodiment.
FIG. 16 is an exploded perspective view of the rear part of the sunroof apparatus of FIG. 15.
FIG. 17 is a side view at a time when a movable panel is arranged at a fully-closing position, in the sunroof apparatus of FIG. 15.
FIG. 18 is a side view at a time when the movable panel is arranged at a tilt-up position, in the sunroof apparatus of FIG. 15.
FIG. 19 is a side view at a time when a movable panel is arranged at a fully-closing position, in a sunroof apparatus according to a third embodiment.
FIG. 20 is a side view at a time when the movable panel is arranged at a tilt-up position, in the sunroof apparatus of FIG. 19.
FIG. 21 is a side view at a time when a movable panel is arranged at a fully-closing position, in a sunroof apparatus according to a fourth embodiment.
FIG. 22 is a side view at a time when the movable panel is arranged at a tilt-up position, in the sunroof apparatus of FIG. 21.

### DESCRIPTION OF EMBODIMENTS

Hereinafter, a first embodiment of a sunroof apparatus will be described.

### <Configuration of First Embodiment>

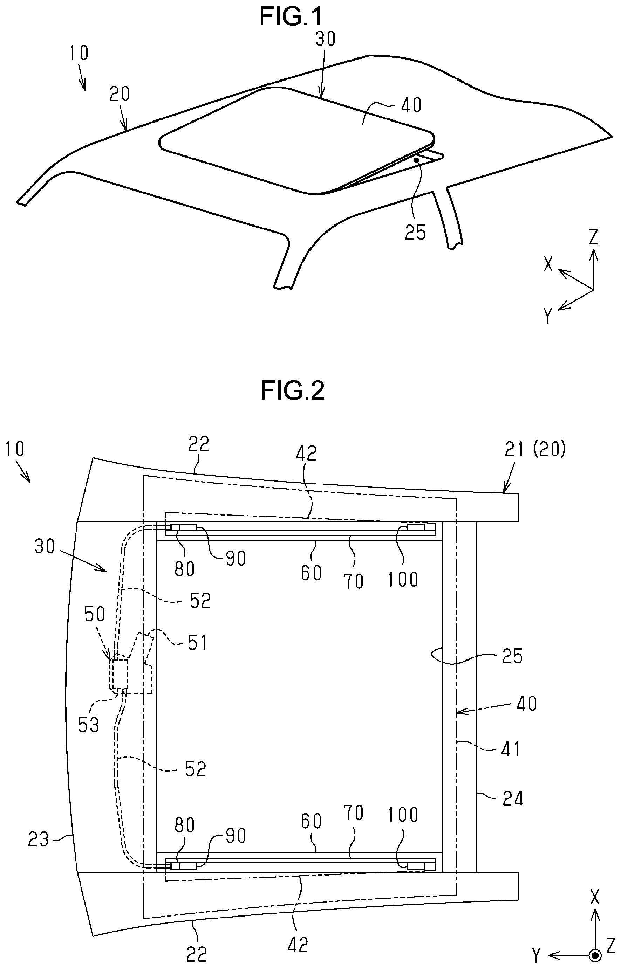

As shown in FIG. 1, a vehicle 10 includes a vehicle body 20 and a sunroof apparatus 30.

In the drawings, a direction in which the X-axis extends is a width direction of the vehicle 10, a direction in which the Y-axis extends is a front-rear direction of the vehicle 10, and a direction in which the Z-axis extends is an up-down direction of the vehicle 10. In the following description, the width direction of the vehicle 10, the front-rear direction of the vehicle 10, and the up-down direction of the vehicle 10 are also simply referred to as the width direction, the front-rear direction, and the up-down direction, respectively. In addition, in the width direction, a direction away from the center of the vehicle 10 is also referred to outward, and a direction approaching the center of the vehicle 10 is also referred to as inward.

### <Vehicle Body 20>

As shown in FIG. 2, the vehicle body 20 includes a roof panel 21 forming a roof. The roof panel 21 includes two side panels 22 extending in the front-rear direction, a front panel 23 connecting front ends of the two side panels 22, and a rear panel 24 connecting rear ends of the two side panels 22. In addition, the roof panel 21 has a roof opening 25 defined by the two side panels 22, the front panel 23, and the rear panel 24. In plan view from above, the roof opening 25 has a rectangular shape. The longer direction of the roof opening 25 is the width direction, and the shorter direction of the roof opening 25 is the front-rear direction.

### <Sunroof Apparatus 30>

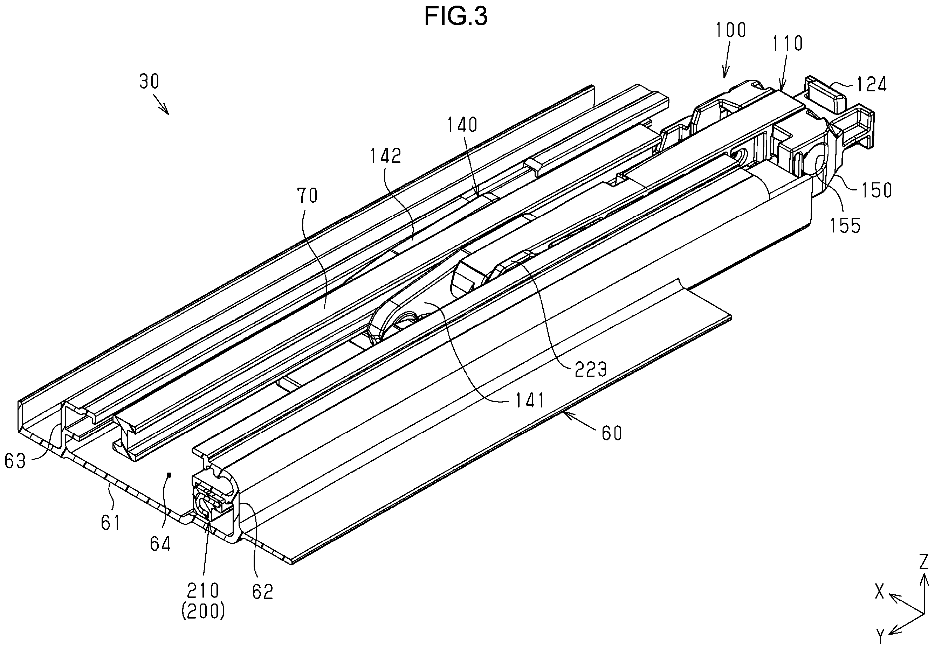

As shown in FIGS. 2 and 3, the sunroof apparatus 30 includes a movable panel 40, an actuator 50, guide rails 60, fixation brackets 70, drive shoes 80, front support parts 90, rear support parts 100, and power transmission members 200. As shown in FIG. 2, many of the components of the sunroof apparatus 30 have symmetrical shapes and are disposed on the right and the left of the roof opening 25. Thus, in the following description, the components on the right of the sunroof apparatus 30 will be described.

### <Movable Panel 40>

As shown in FIG. 2, the movable panel 40 includes a panel body 41 having a plate shape and a panel bracket 42 joined to the panel body 41.

The panel body 41 is made of a material such as glass or resin that can transmit light. The panel body 41 has a size and a shape corresponding to those of the roof opening 25. The peripheral edge of the panel body 41 is preferably coated with a resin material for the purpose of protecting the panel body 41. The panel bracket 42 is joined to a lower surface of the panel body 41. The panel brackets 42 extend in the front-rear direction, on both sides of the panel body 41 in the width direction.

### <Actuator 50>

As shown in FIG. 2, the actuator 50 includes an electric motor 51, a cable 52 driven by the electric motor 51, and a conversion mechanism 53 that converts rotational motion of an output shaft of the electric motor 51 into advancing and retreating motion of the cable 52.

The electric motor 51 and the conversion mechanism 53 are fixed to a central portion of the front panel 23 in the width direction. The cable 52 is a push-pull cable capable of pushing and pulling the drive shoe 80. The cable 52 is arranged along the front panel 23 and the guide rail 60.

### <Guide Rail 60>

As shown in FIGS. 2 and 3, the guide rail 60 has a long shape long in the front-rear direction. The longer direction of the guide rail 60 is the front-rear direction. In the first embodiment, the guide rail 60 is slightly curved to protrude upward as viewed in the width direction. That is, the guide rail 60 extending in the front-rear direction includes not only the guide rail 60 extending linearly but also the guide rail 60 extending while being curved. The guide rail 60 is formed by, for example, extruding a metal material such as aluminum.

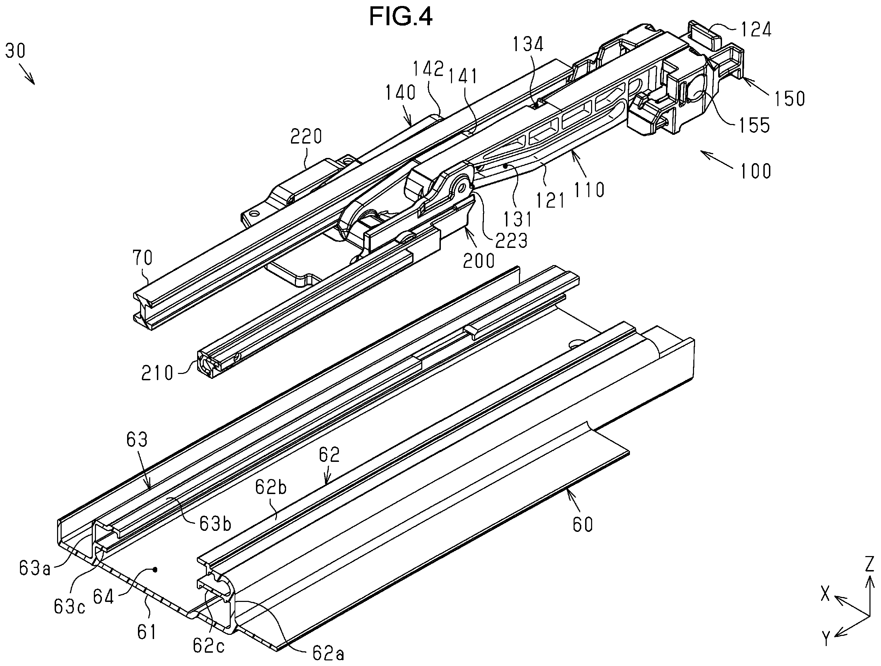

As shown in FIG. 4, the guide rail 60 includes a bottom wall 61, an inner wall 62, and an outer wall 63. In addition, the guide rail 60 has an accommodation space 64 defined by the bottom wall 61, the inner wall 62, and the outer wall 63.

The bottom wall 61 has a long flat plate shape long in the front-rear direction. The longer direction of the bottom wall 61 is the front-rear direction, the shorter direction of the bottom wall 61 is the width direction, and the plate thickness direction of the bottom wall 61 is the up-down direction. The inner wall 62 extends, from a position closer to an inner end than an outer end, in the width direction, of the bottom wall 61. The inner wall 62 includes a first inner wall 62a extending upward from the bottom wall 61, a second inner wall 62b extending outward in the width direction from a distal end of the first inner wall 62a, and a third inner wall 62c extending outward in the width direction from the first inner wall 62a below the second inner wall 62b. The outer wall 63 extends, from a position closer to the outer end than the inner end, in the width direction, of the bottom wall 61. The outer wall 63 includes a first outer wall 63a extending upward from the bottom wall 61, a second outer wall 63b extending inward in the width direction from a distal end of the first outer wall 63a, and a third outer wall 63c extending inward in the width direction from the first outer wall 63a below the second outer wall 63b.

As shown in FIG. 2, the guide rail 60 is fixed to the vehicle body 20 to be adjacent to the side panel 22. Thus, the guide rails 60 extend in the front-rear direction, on both sides of the roof opening 25 in the width direction.

### <Fixation Bracket 70>

As shown in FIG. 2, the fixation bracket 70 extends in the front-rear direction. The length of the fixation bracket 70 is preferably equal to the length of the panel bracket 42 of the movable panel 40. The fixation bracket 70 is formed by, for example, extruding or pressing a metal material. As shown in FIG. 3, the fixation bracket 70 is formed such that a cross-sectional shape orthogonal to the longer direction thereof is an "I" shape. In the state shown in FIG. 3, the fixation bracket 70 is accommodated in the accommodation space 64 of the guide rail 60. The fixation bracket 70 is fixed to the panel bracket 42 of the movable panel 40. Thus, in a case where the fixation bracket 70 moves with respect to the guide rail 60, the movable panel 40 moves together with the fixation bracket 70.

### <Drive Shoe 80>

As shown in FIG. 2, the drive shoe 80 is accommodated in the accommodation space 64 of the guide rail 60. Thus, the drive shoe 80 is allowed to move in the front-rear direction, which is the longer direction of the guide rail 60, and movements of the drive shoe 80 in the width direction and the up-down direction, which are directions orthogonal to the longer direction of the guide rail 60, are restricted. A distal end of the cable 52 of the actuator 50 is connected to the drive shoe 80. The drive shoe 80 moves in the front-rear direction along the guide rail 60 based on power transmitted from the actuator 50.

### <Front Support Part 90>

As shown in FIG. 2, the front support part 90 is accommodated in the accommodation space 64 of the guide rail 60. The front support part 90 rotatably supports a distal end portion of the fixation bracket 70 about an axis extending in the width direction. That is, the front support part 90 supports the movable panel 40 through the fixation bracket 70. The front support part 90 moves in the front-rear direction along the guide rail 60 based on power transmitted from the drive shoe 80. In a case where the front support part 90 moves in the front-rear direction, the fixation bracket 70 also moves in the front-rear direction together with the front support part 90.

### <Rear Support Part 100>

As shown in FIGS. 2 and 3, the rear support part 100 is accommodated in the accommodation space 64 of the guide rail 60, at a position closer to a rear end than a front end of the guide rail 60. The rear support part 100 supports the fixation bracket 70 at a position rearward relative to the front support part 90. That is, the rear support part 100 supports the movable panel 40 through the fixation bracket 70.

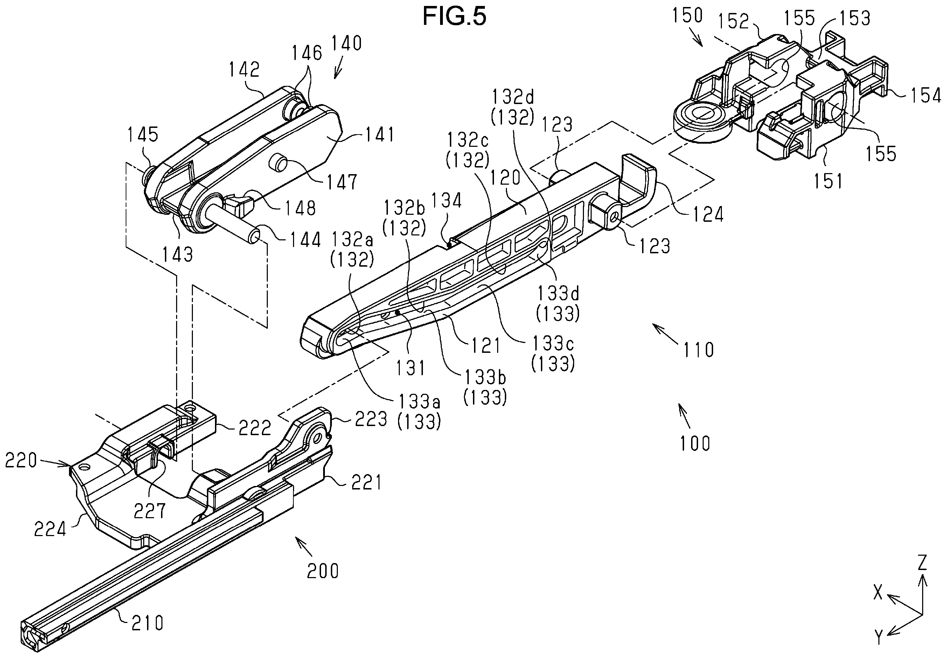

As shown in FIGS. 5 to 7, the rear support part 100 includes a first rear link 110, a second rear link 140, and a link support portion 150.

### <First Rear Link 110>

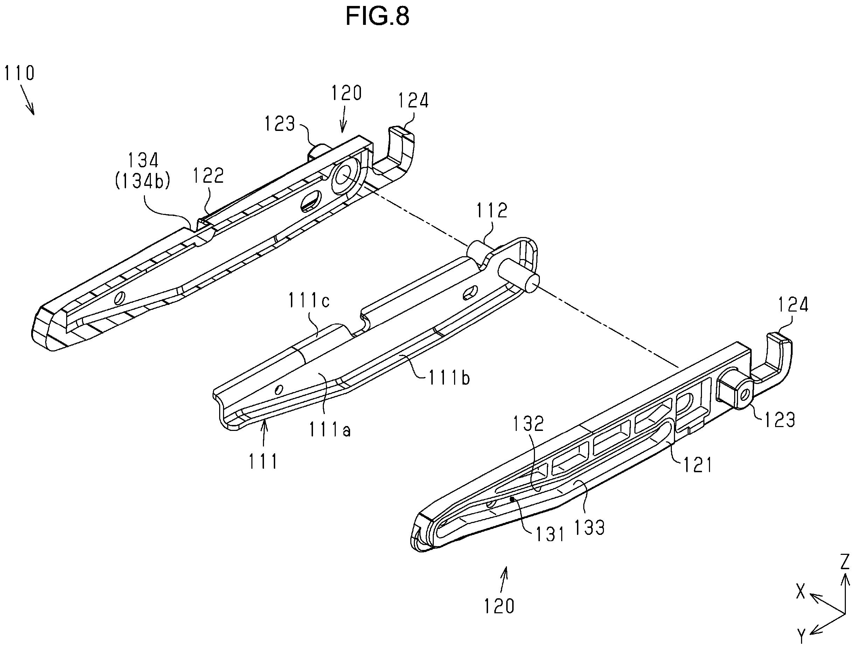

As shown in FIGS. 5 to 7, the first rear link 110 has a bar shape long in a direction orthogonal to the width direction, as viewed in the width direction. In the following description, one end in the longer direction of the first rear link 110 is referred to as a proximal end, and the other end in the longer direction of the first rear link 110 is referred to as a distal end. As shown in FIG. 8, the first rear link 110 includes a core member 111 and a pin 112 each made of a metal material, and a covering portion 120 made of a resin material. Note that, in reality, the covering portion 120 is not necessarily formed by combining in the width direction two resin components formed separately as shown in FIG. 8.

The core member 111 includes a base portion 111a having a plate shape, a lower flange 111b extending inward in the width direction from a lower end of the base portion 111a, and an upper flange 111c extending outward in the width direction from an upper end of the base portion 111a. The plate thickness direction of the base portion 111a coincides with the width direction. The core member 111 is preferably formed by, for example, pressing a metal plate. A notch is provided in a central portion of the upper flange 111c in the longer direction of the first rear link 110. In this respect, the upper flange 111c is divided into two portions, in the longer direction of the first rear link 110. The axial direction of the pin 112 is the plate thickness direction of the base portion 111a. The pin 112 is fixed to the base portion 111a in a state of being passed through the base portion 111a in the width direction. Note that the elastic moduli of the core member 111 and the pin 112 are higher than the elastic modulus of the covering portion 120.

The covering portion 120 covers the entire core member 111. The covering portion 120 includes a first rib 121, a second rib 122, two first link support shafts 123, and a hook 124. As an example, the covering portion 120 may be formed by injecting a liquid resin around the core member 111 and the pin 112 placed in a mold and then solidifying the liquid resin.

As shown in FIGS. 5 and 8, the first rib 121 extends inward in the width direction from the base portion 111a of the core member 111. The first rib 121 is located to be offset inward in the width direction from the base portion 111a of the core member 111. A portion of the first rib 121 covers the lower flange 111b of the core member 111.

As shown in FIG. 5, the first rib 121 defines a first slide groove 131. The first slide groove 131 extends along the longer direction of the first rear link 110. In the following description, of both end portions of the first slide groove 131 in a direction in which the first slide groove 131 extends, an end portion closer to the distal end of the first rear link 110 is referred to as a first end, and an end portion farther from the distal end of the first rear link 110 is referred to as a second end. In addition, among surfaces that are inner surfaces of the first rib 121 and that define the first slide groove 131, surfaces extending along the longer direction of the first rear link 110 are referred to as a first upper slide surface 132 and a first lower slide surface 133.

The first upper slide surface 132 and the first lower slide surface 133 are surfaces facing each other in the up-down direction, and in the state shown in each of FIGS. 5 to 7, the first upper slide surface 132 is a surface located above the first lower slide surface 133. The first upper slide surface 132 includes a first surface 132a, a second surface 132b, a third surface 132c, and a fourth surface 132d from the distal end toward the proximal end of the first rear link 110. Likewise, the first lower slide surface 133 includes a first surface 133a, a second surface 133b, a third surface 133c, and a fourth surface 133d from the distal end toward the proximal end of the first rear link 110. The first surfaces 132a, 133a and the third surfaces 132c, 133c extend in the same direction. The second surfaces 132b, 133b are respectively inclined with respect to the adjacent first surfaces 132a, 133a, and the fourth surfaces 132d, 133d are respectively inclined with respect to the adjacent third surfaces 132c, 133c. The first surfaces 132a, 133a and the fourth surfaces 132d, 133d are shorter than the second surfaces 132b, 133b and the third surfaces 132c, 133c.

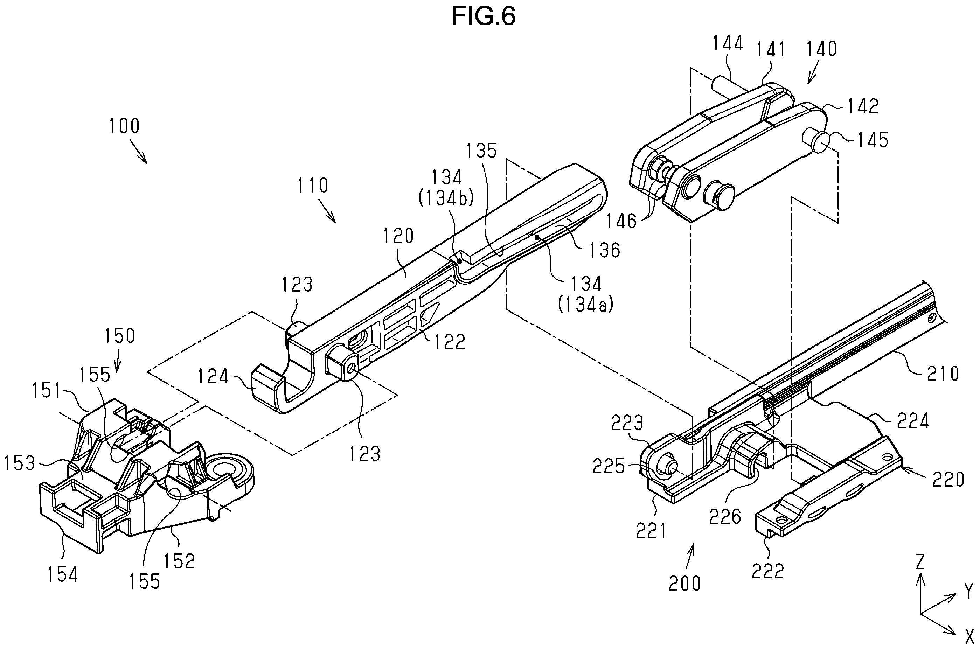

As shown in FIGS. 6 and 8, the second rib 122 extends outward in the width direction from the base portion 111a of the core member 111. That is, a direction in which the second rib 122 extends is a direction opposite to a direction in which the first rib 121 extends. The second rib 122 is located to be offset outward in the width direction from the base portion 111a of the core member 111. A portion of the second rib 122 covers the upper flange 111c of the core member 111.

As shown in FIG. 6, the second rib 122 defines a second slide groove 134. The second slide groove 134 includes a lateral groove 134a extending along the longer direction of the first rear link 110 and an upright groove 134b extending in a direction intersecting with the lateral groove 134a. The lateral groove 134a extends from the distal end portion of the first rear link 110 toward the proximal end portion of the first rear link 110. The upright groove 134b extends from an end portion of the lateral groove 134a closer to the rotation axis of the first rear link 110. The length of the upright groove 134b is shorter than the length of the lateral groove 134a. The upright groove 134b penetrates the second rib 122 in the up-down direction. In the following description, of both end portions of the second slide groove 134 in a direction in which the second slide groove 134 extends, an end portion closer to the distal end of the first rear link 110 is referred to as a first end, and an end portion farther from the distal end of the first rear link 110 is referred to as a second end. In addition, among surfaces that are inner surfaces of the second rib 122 and that define the second slide groove 134, surfaces extending along the longer direction of the first rear link 110 are referred to as a second upper slide surface 135 and a second lower slide surface 136. The second upper slide surface 135 and the second lower slide surface 136 are surfaces facing each other in the up-down direction, and in the state shown in each of FIGS. 5 to 7, the second upper slide surface 135 is a surface located above the second lower slide surface 136. The second slide groove 134 corresponds to a "slide groove".

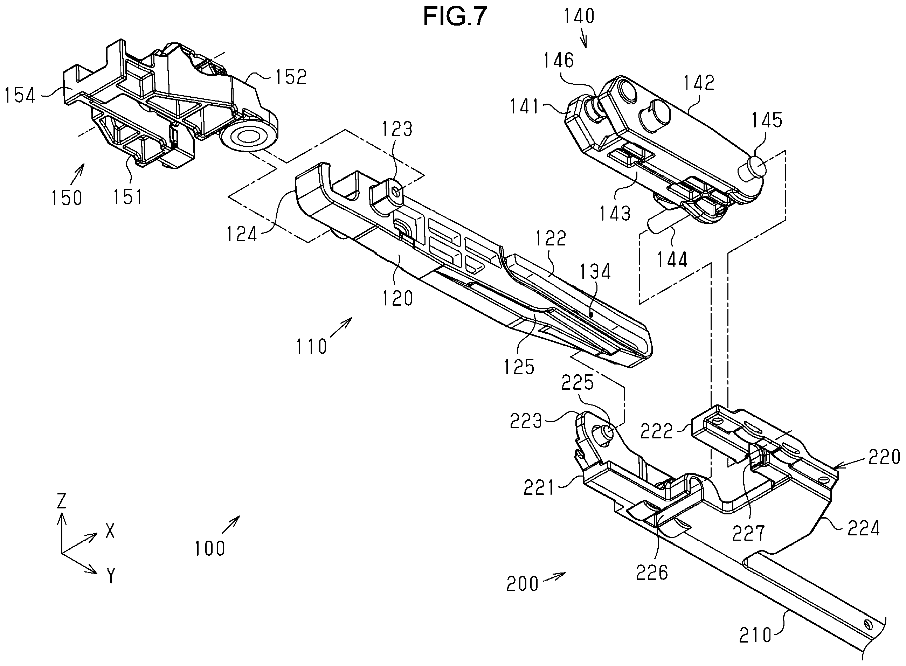

As shown in FIG. 7, the second rib 122 has an engagement recess portion 125 whose depth direction is a direction orthogonal to both the width direction and the longer direction of the first rear link 110. A space of the engagement recess portion 125 in the width direction becomes narrower toward the depth direction. The engagement recess portion 125 is located at a central portion in the longer direction of the first rear link 110. In the first rear link 110, when, among surfaces orthogonal to the width direction and surfaces orthogonal to the longer direction of the first rear link 110, a surface to which the second slide groove 134 opens is defined as an upper surface, it can be said that the engagement recess portion 125 opens to a lower surface opposite to the upper surface.

As shown in FIGS. 5 and 6, the two first link support shafts 123 extend inward and outward in the width direction, respectively. The two first link support shafts 123 are rotation shafts of the first rear link 110. The axes of the two first link support shafts 123 are collinearly located, and pass through the proximal end portion of the first rear link 110 in the width direction. Each of the two first link support shafts 123 is formed such that a cross-sectional shape orthogonal to the width direction thereof is an oval shape. Thus, a side surface of the first link support shaft 123 has two flat surfaces opposite to each other in the longer direction of the first rear link 110, and two peripheral surfaces opposite to each other in the depth direction. The distance between the two flat surfaces is shorter than the distance between the two peripheral surfaces. The two first link support shafts 123 are located closer to the proximal end than the distal end of the second rear link 140. Note that since the two first link support shafts 123 are components of the first rear link 110, it can be said that the rear support part 100 includes the two first link support shafts 123.

The hook 124 forms the proximal end portion of the first rear link 110. The hook 124 has an L shape as viewed in the width direction. A distal end of the hook 124 extends from the lower surface of the first rear link 110, to which the engagement recess portion 125 opens, toward the upper surface of the first rear link 110, to which the second slide groove 134 opens.

### <Second Rear Link 140>

Similarly to the first rear link 110, the second rear link 140 is formed by covering a metal material with a resin material. In another embodiment, the second rear link 140 may be made of only a metal material, or may be made of only a resin material. The second rear link 140 has a bar shape. In the following description, one end in the longer direction of the second rear link 140 is referred to as a proximal end, and the other end in the longer direction of the second rear link 140 is referred to as a distal end.

As shown in FIGS. 5 to 7, the second rear link 140 includes a first side wall 141, a second side wall 142, an intermediate wall 143, two second link support shafts 144, 145, two guide shafts 146, a second slide shaft 147, and an engagement protrusion portion 148.

Each of the first side wall 141 and the second side wall 142 has a plate shape. Each of the respective plate thickness directions of the first side wall 141 and the second side wall 142 coincides with the width direction. The first side wall 141 and the second side wall 142 are arranged in a state of being spaced apart from each other in the width direction. The first side wall 141 is located inward in the width direction with respect to the second side wall 142. A distance in the width direction between the first side wall 141 and the second side wall 142 is slightly wider than the length of the fixation bracket 70 in the width direction. The intermediate wall 143 has a plate shape. The plate thickness direction of the intermediate wall 143 coincides with a direction orthogonal to both the width direction and the longer direction of the second rear link 140. The intermediate wall 143 connects the first side wall 141 and the second side wall 142 to each other.

The second link support shaft 144 extends inward in the width direction from a proximal end portion of the first side wall 141, and the second link support shaft 145 extends outward in the width direction from a proximal end portion of the second side wall 142. The second link support shafts 144, 145 are rotation shafts of the second rear link 140. The axes of the second link support shafts 144, 145 are collinearly located. One of the two guide shafts 146 extends outward in the width direction from a distal end portion of the first side wall 141, and the other one of the two guide shafts 146 extends inward in the width direction from a distal end portion of the second side wall 142. The axes of the two guide shafts 146 are collinearly located. In this respect, it can be said that the two guide shafts 146 extend in directions approaching each other. Note that since the second link support shafts 144, 145 are components of the second rear link 140, it can be said that the rear support part 100 includes the second link support shafts 144, 145.

As shown in FIG. 5, the second slide shaft 147 extends inward in the width direction from a central portion of the first side wall 141. In the width direction, the length of the second slide shaft 147 is shorter than the length of the second link support shaft 144. The second slide shaft 147 corresponds to a "slide shaft". The engagement protrusion portion 148 extends inward in the width direction from the proximal end portion of the first side wall 141 and then extends toward the distal end portion of the first side wall 141. Specifically, the engagement protrusion portion 148 extends from a portion of the first side wall 141 between the position at which the second link support shaft 144 extends and the position at which the second slide shaft 147 extends. The length of the engagement protrusion portion 148 in the width direction decreases toward a distal end of the engagement protrusion portion 148, as viewed in the plate thickness direction of the intermediate wall 143. That is, the engagement protrusion portion 148 is tapered.

As viewed in the width direction, when the first rear link 110 and the second rear link 140 are compared with each other, the entire length of the first rear link 110 is longer than the entire length of the second rear link 140. Here, each of the entire length of the first rear link 110 and the entire length of the second rear link 140 is sufficient as long as the entire length is the entire length as a shape. In this case, the entire length of the first rear link 110 is a distance from the proximal end to the distal end of the first rear link 110, and the entire length of the second rear link 140 is a distance from the proximal end to the distal end of the second rear link 140. In addition, each of the entire length of the first rear link 110 and the entire length of the second rear link 140 may be the entire length as a function. In this case, the entire length of the first rear link 110 is a distance from the rotation center of the first rear link 110 to a front end of the first slide groove 131 or a front end of the second slide groove 134 of the first rear link 110, and the entire length of the second rear link 140 is a distance from the rotation center of the first rear link 110 to the centers of the two guide shafts 146.

### <Link Support Portion 150>

As shown in FIGS. 5 to 7, the link support portion 150 includes a first support block 151, a second support block 152, a first connection wall 153, and a second connection wall 154.

The first support block 151 and the second support block 152 are arranged in a state of being spaced apart from each other in the width direction. The first support block 151 is located inward in the width direction with respect to the second support block 152. A distance in the width direction between the first support block 151 and the second support block 152 is slightly wider than a length, excluding the lengths of the two first link support shafts 123, of the first rear link 110 in the width direction. On the other hand, the distance in the width direction between the first support block 151 and the second support block 152 is narrower than a length, including the lengths of the two first link support shafts 123, of the first rear link 110 in the width direction. The first support block 151 and the second support block 152 have respective support holes 155 penetrating therethrough in the width direction. Each of the two support holes 155 has a circular shape as viewed in the width direction, and axes of the two support holes 155 are collinearly located. Here, the first support block 151 and the second support block 152 do not have respective wall portions defining front sides of the two support holes 155. Thus, the two support holes 155 are opened to the front side, which is also the radial direction of the two support holes 155. Therefore, when the link support portion 150 is viewed from the front side, respective inner peripheral surfaces of the support holes 155 are exposed.

The first connection wall 153 connects the first support block 151 and the second support block 152 to each other at a position rearward relative to the support holes 155. The second connection wall 154 connects the first support block 151 and the second support block 152 in the width direction at a position on the rear side and the lower side of the first connection wall 153. A gap exists between the first connection wall 153 and the second connection wall 154 in both the front-rear direction and the up-down direction.

### <Power Transmission Member 200>

As shown in FIGS. 5 to 7, the power transmission member 200 is a long member long in the front-rear direction. Similarly to the first rear link 110, the power transmission member 200 is formed by covering a metal material with a resin material. In another embodiment, the power transmission member 200 may be made of only a metal material, or may be made of only a resin material. The power transmission member 200 includes a rod 210 and a rear shoe 220.

The rod 210 extends in the front-rear direction. In a case where the guide rail 60 is slightly curved as in the first embodiment, the rod 210 is also preferably curved in a similar manner.

The rear shoe 220 is connected to a rear end portion of the rod 210. The rear shoe 220 includes a first slide block 221, a second slide block 222, a holding wall 223, a connection plate 224, and a first slide shaft 225.

The first slide block 221 and the second slide block 222 are arranged in a state of being spaced apart from each other in the width direction. The first slide block 221 is located inward in the width direction with respect to the second slide block 222. The first slide block 221 has a first recess portion 226 recessed upward from a bottom surface of the first slide block 221. The second slide block 222 has a second recess portion 227 recessed upward from a bottom surface of the second slide block 222. Each of the first recess portion 226 and the second recess portion 227 has a semicircular shape as viewed in the width direction. Each of the first recess portion 226 and the second recess portion 227 corresponds to a "recess portion of the power transmission member". The holding wall 223 has a plate shape. The plate thickness direction of the holding wall 223 coincides with the width direction. The holding wall 223 extends upward from the first slide block 221. The holding wall 223 holds a proximal end of the first slide shaft 225. In a state of being held by the holding wall 223, the first slide shaft 225 extends outward in the width direction. The connection plate 224 has a plate shape. The plate thickness direction of the connection plate 224 coincides with the up-down direction. The connection plate 224 connects the first slide block 221 and the second slide block 222 to each other.

### <Engagement Relationship Between Rear Support Part 100 and Power Transmission Member 200>

As shown in FIG. 3, the link support portion 150 is fixed to the rear end of the guide rail 60 using a fastening member such as a screw. At this time, most of the link support portion 150 protrudes rearward with respect to the guide rail 60. In another embodiment, the link support portion 150 can be accommodated in the accommodation space 64 of the guide rail 60.

As shown in FIGS. 5 to 7, the two first link support shafts 123 of the first rear link 110 are respectively inserted into the two support holes 155 of the link support portion 150. Thus, the first rear link 110 is rotatable about the axis of each of the two first link support shafts 123 with respect to the link support portion 150. Here, when the link support portion 150 is caused to support the first rear link 110, first, a posture of the first rear link 110 is determined such that the two flat surfaces forming the side surfaces of the two first link support shafts 123 of the first rear link 110 face toward the up-down direction. Subsequently, the height of the axis of each of the two first link support shafts 123 of the first rear link 110 is caused to match with the height of the axis of each of the two support holes 155 of the link support portion 150. Thereafter, the first rear link 110 is caused to move rearward, and the two first link support shafts 123 of the first rear link 110 are respectively received in the two support holes 155 of the link support portion 150. Finally, the first rear link 110 is tilted down frontward, whereby the first rear link 110 is supported by the link support portion 150.

The power transmission member 200 is accommodated in the accommodation space 64 of the guide rail 60. Specifically, the rod 210 and the first slide block 221 of the power transmission member 200 are accommodated in a space defined by the bottom wall 61, the first inner wall 62a, and the third inner wall 62c of the guide rail 60. On the other hand, the second slide block 222 of the power transmission member 200 is accommodated in a space defined by the first outer wall 63a, the second outer wall 63b, and the third outer wall 63c of the guide rail 60. Thus, the power transmission member 200 is movable in the front-rear direction along the guide rail 60 in a state where movements of the power transmission member 200 in the width direction and the up-down direction are restricted. Note that in the first embodiment, since the guide rail 60 is curved, the state where the movement in the up-down direction is restricted is a state in which movement in each of the plate thickness directions of the bottom wall 61, the third inner wall 62c, the second outer wall 63b, and the third outer wall 63c of the guide rail 60 is restricted.

In addition, the second link support shaft 144 of the second rear link 140 is arranged between the first slide block 221 and the bottom wall 61 of the guide rail 60, and the second link support shaft 145 of the second rear link 140 is arranged between the second slide block 222 and the bottom wall 61 of the guide rail 60. At this time, the second link support shaft 144 of the second rear link 140 is placed in the first recess portion 226 of the first slide block 221, and the second link support shaft 145 of the second rear link 140 is placed in the second recess portion 227 of the second slide block 222. That is, each of the second link support shafts 144, 145 of the second rear link 140 is sandwiched in the up-down direction between the corresponding one of the first recess portion 226 and the second recess portion 227 of the power transmission member 200 and the guide rail 60. Thus, the second rear link 140 is movable in the front-rear direction along the guide rail 60 together with the power transmission member 200. In addition, the second rear link 140 is rotatable about the axis of each of the second link support shafts 144, 145 with respect to the power transmission member 200. Note that the second link support shafts 144, 145 are arranged frontward relative to the first link support shafts 123.

As shown in FIGS. 5 to 7, the first slide block 221 of the power transmission member 200 and the first side wall 141 of the second rear link 140 are adjacent to each other in the width direction. In addition, the second slide block 222 of the power transmission member 200 and the second side wall 142 of the second rear link 140 are adjacent to each other in the width direction. In these respects, it can be said that a portion, in the power transmission member 200, that transmits power to the second rear link 140 and a portion, in the second rear link 140, to which the power is transmitted from the power transmission member 200 are adjacent to each other in the width direction. Here, the state of being adjacent to each other in the width direction means a state in which the portion in the power transmission member 200 described above and the portion in the second rear link 140 described above are close to each other in the width direction, and in which another member does not exist between these portions.

In the state shown in FIG. 3, the holding wall 223 of the power transmission member 200 is adjacent to the first rear link 110 in the width direction. Specifically, the holding wall 223 of the power transmission member 200 is located outward of the first rear link 110 in the width direction. At this time, as shown in FIGS. 4 and 5, the first slide shaft 225 of the power transmission member 200 is located in the first slide groove 131 of the first rear link 110. Therefore, when the power transmission member 200 moves in the front-rear direction, the first slide shaft 225 slides on the first slide groove 131. Thus, a portion, in the power transmission member 200, that transmits power to the first rear link 110 and a portion, in the first rear link 110, to which the power is transmitted from the power transmission member 200 are adjacent to each other in the width direction. Here, the state of being adjacent to each other in the width direction means a state in which the portion in the power transmission member 200 described above and the portion in the first rear link 110 described above are close to each other in the width direction, and in which another member does not exist between these portions.

In the state shown in FIG. 3, the first rear link 110 is adjacent to the second rear link 140 in the width direction. Specifically, the first rear link 110 is located inward of the second rear link 140 in the width direction. At this time, as shown in FIGS. 4 and 6, the second slide shaft 147 of the second rear link 140 is located in the second slide groove 134 of the first rear link 110. Therefore, when the first rear link 110 rotates or the second rear link 140 moves in the front-rear direction, the second slide shaft 147 slides on the second slide groove 134. Thus, a portion, in the first rear link 110, that transmits power to the second rear link 140 and a portion, in the second rear link 140, to which the power is transmitted from the first rear link 110 are adjacent to each other in the width direction. Here, the state of being adjacent to each other in the width direction means a state in which the portion in the first rear link 110 described above and the portion in the second rear link 140 described above are close to each other in the width direction, and in which another member does not exist between these portions.

As shown in FIG. 4, the distal end portion of the second rear link 140 supports the fixation bracket 70. At this time, the second rear link 140 sandwiches the fixation bracket 70 through the two guide shafts 146 in the width direction. In a state where the second rear link 140 supports the fixation bracket 70, the fixation bracket 70 is rotatable about the axis of each of the two guide shafts 146 with respect to the distal end portion of the second rear link 140. In addition, the fixation bracket 70 is slidable on the two guide shafts 146 of the second rear link 140 in the longer direction of the fixation bracket 70.

### <Relationship Between Position of Movable Panel 40 and Position of Drive Shoe 80>

The sunroof apparatus 30 displaces the movable panel 40 by causing the drive shoe 80 to move in the front-rear direction. Specifically, in a case where the drive shoe 80 is caused to move rearward, the movable panel 40 performs opening operation, and in a case where the drive shoe 80 is caused to move frontward, the movable panel 40 performs closing operation. **In** the following description, a position at which the movable panel 40 fully closes the roof opening 25 is referred to as a "fully-closing position", and a position at which the movable panel 40 fully opens the roof opening 25 is referred to as a "fully-opening position". **In** addition, a position at which a rear end portion of the movable panel 40 is lifted higher than the fully-closing position is referred to as a "tilt-up position".

Further, a position of the drive shoe 80 at which the movable panel 40 is caused to be arranged at the fully-closing position is referred to as a "full-closing corresponding position", and a position of the drive shoe 80 at which the movable panel 40 is caused to be arranged at the fully-opening position is referred to as a "full-opening corresponding position". In addition, a position of the drive shoe 80 at which the movable panel 40 is caused to be arranged at the tilt-up position is referred to as a "tilt-up corresponding position". In the movement range of the drive shoe 80, the frontmost position is the full-closing corresponding position, and the rearmost position is the full-opening corresponding position. The tilt-up corresponding position is a position between the full-closing corresponding position and the full-opening corresponding position.

In a case where the drive shoe 80 moves between the full-closing corresponding position and the tilt-up corresponding position, the power transmission member 200 moves in the front-rear direction together with the drive shoe 80. On the other hand, in a case where the drive shoe 80 moves between the tilt-up corresponding position and the full-opening corresponding position, the power transmission member 200 does not move in the front-rear direction together with the drive shoe 80. In contrast, in the case where the drive shoe 80 moves between the full-closing corresponding position and the tilt-up corresponding position, the front support part 90 does not move in the front-rear direction together with the drive shoe 80. On the other hand, in the case where the drive shoe 80 moves between the tilt-up corresponding position and the full-opening corresponding position, the front support part 90 moves in the front-rear direction together with the drive shoe 80.

### <Operation of First Embodiment>

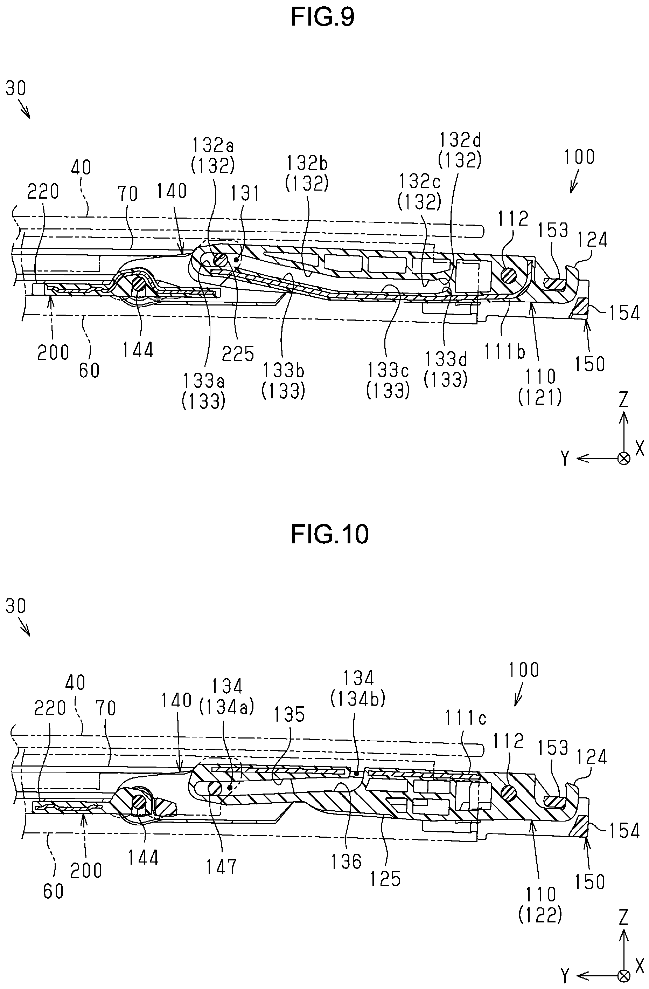

Operation at the time when the sunroof apparatus 30 tilts up the movable panel 40 will be described with reference to FIGS. 9 to 14. FIGS. 9 to 14 are cross-sectional views of the sunroof apparatus 30 taken orthogonal to the width direction. FIGS. 9, 11, and 13 are cross-sectional views showing the first slide groove 131 of the first rear link 110, and FIGS. 10, 12, and 14 are cross-sectional views showing the second slide groove 134 of the first rear link 110.

In the state shown in each of FIGS. 9 and 10, the drive shoe 80 is located at the full-closing corresponding position. In a case where the drive shoe 80 is located at the full-closing corresponding position, the power transmission member 200 is located at the frontmost position in a movement range thereof in the front-rear direction.

As shown in FIG. 9, in a case where the power transmission member 200 is located at the frontmost position, the first slide shaft 225 of the power transmission member 200 is located at the first end portion of the first slide groove 131 of the first rear link 110. In addition, the first slide shaft 225 of the power transmission member 200 is in contact with the first lower slide surface 133 of the first slide groove 131. Specifically, the first slide shaft 225 of the power transmission member 200 is in contact with the first surface 133a. At this time, the first slide shaft 225 of the power transmission member 200 presses down the first rear link 110 toward the bottom wall 61 of the guide rail 60. In the following description, as shown in FIGS. 9 and 10, a position at which the first rear link 110 is tilted down is referred to as a "first tilted-down position". In a case where the first rear link 110 is located at the first tilted-down position, inclinations of the first slide groove 131 and the second slide groove 134 of the first rear link 110 with respect to the front-rear direction are small.

In the state shown in FIG. 9, the first surfaces 132a, 133a of the first slide groove 131 extend in the front-rear direction. The second surfaces 132b, 133b of the first slide groove 131 are inclined downward toward the rear side. In other words, the second surfaces 132b, 133b of the first slide groove 131 are inclined toward a lower edge of the guide rail 60, as the second surfaces 132b, 133b extend from the distal end portion toward the proximal end portion of the first rear link 110. In addition, in the state shown in FIG. 10, the second lower slide surface 136 of the second slide groove 134 is slightly inclined upward toward the rear side. In other words, the second lower slide surface 136 is inclined toward an upper edge of the guide rail 60, as the second lower slide surface 136 extends from the distal end portion toward the proximal end portion of the first rear link 110.

As shown in FIG. 10, in the case where the power transmission member 200 is located at the frontmost position, the second rear link 140 is also located at the frontmost position in a movement range thereof in the front-rear direction. Thus, the second slide shaft 147 of the second rear link 140 is located at the first end portion of the second slide groove 134 of the first rear link 110. In addition, the second slide shaft 147 of the second rear link 140 is in contact with the second upper slide surface 135 of the second slide groove 134. At this time, the second upper slide surface 135 of the first rear link 110 presses down the second rear link 140 toward the bottom wall 61 of the guide rail 60. In the following description, as shown in FIGS. 9 and 10, a position at which the second rear link 140 is tilted down is referred to as a "second tilted-down position".

As shown in FIG. 9, in the case where the first rear link 110 is located at the first tilted-down position, the first rear link 110 is located on a lower side of the upper edge of the guide rail 60. That is, as viewed in the width direction, the first rear link 110 is hidden by the guide rail 60, except the proximal end portion of the first rear link 110. Likewise, as shown in FIG. 10, in a case where the second rear link 140 is located at the second tilted-down position, the second rear link 140 is located on a lower side of the upper edge of the guide rail 60. That is, as viewed in the width direction, the second rear link 140 is hidden by the guide rail 60. In this respect, the second slide shaft 147 of the second rear link 140 is also hidden by the guide rail 60.

As described above, in the case where the drive shoe 80 is located at the full-closing corresponding position, the first rear link 110 is located at the first tilted-down position, and the second rear link 140 is located at the second tilted-down position. Thus, since the distal end portion of the second rear link 140 is lowered, a rear end portion of the fixation bracket 70 is also lowered. As a result, the movable panel 40 is arranged at the fully-closing position. In these respects, the first tilted-down position of the first rear link 110 is a position at which the second rear link 140 is caused to be arranged at the second tilted-down position, and the second tilted-down position of the second rear link 140 is a position at which the movable panel 40 is caused to be arranged at the fully-closing position.

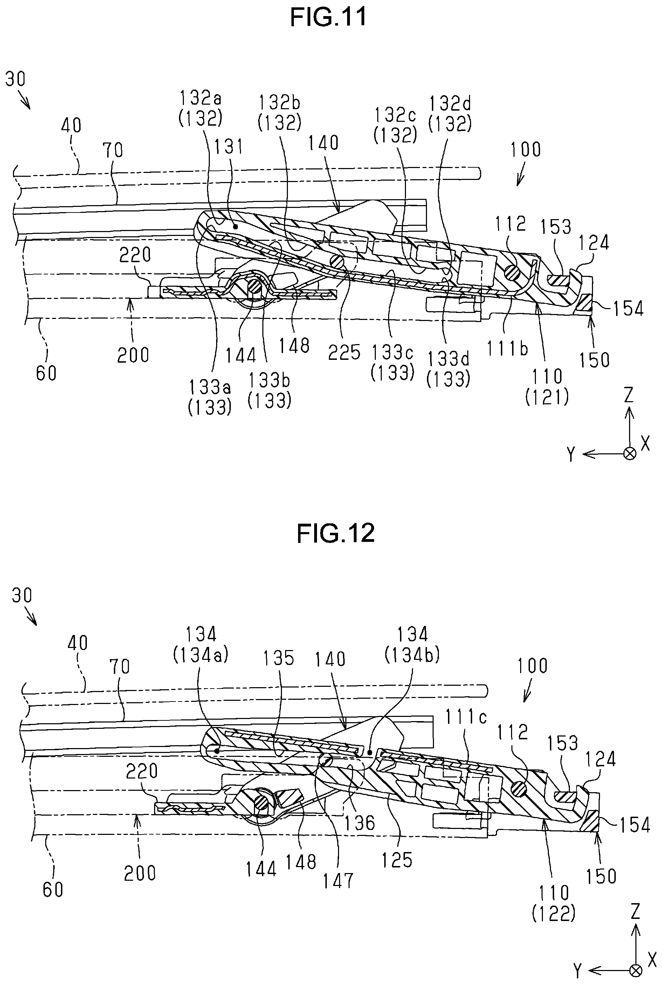

As shown in FIGS. 11 and 12, when the drive shoe 80 moves rearward from the full-closing corresponding position, the power of the drive shoe 80 is transmitted to the power transmission member 200 without being transmitted to the front support part 90. That is, the power transmission member 200 moves rearward while the position and posture of the front support part 90 supporting a front end portion of the fixation bracket 70 are substantially unchanged.

As shown in FIG. 11, in a case where the power transmission member 200 moves rearward, the first slide shaft 225 of the power transmission member 200 slides on the first upper slide surface 132 of the first rear link 110. That is, the first slide shaft 225 pushes the first upper slide surface 132 rearward, whereby the first rear link 110 rotates to rise from the first tilted-down position. Specifically, the first rear link 110 starts to rotate when the first slide shaft 225 starts to slide on the second surface 132b. As the rotation amount of the first rear link 110 increases, the inclinations of the first slide groove 131 and the second slide groove 134 of the first rear link 110 with respect to the front-rear direction increase. Accordingly, in the case where the power transmission member 200 moves rearward, the first link support shafts 123, that is, the pin 112 do not move toward the rear side, which is the movement direction of the power transmission member 200. On the other hand, the first rear link 110 rotates about the axis of each of the first link support shafts 123.

As shown in FIG. 12, in the case where the power transmission member 200 moves rearward, the second slide shaft 147 of the second rear link 140 slides on the second lower slide surface 136 of the first rear link 110 while the second rear link 140 moves rearward together with the power transmission member 200. That is, the power transmission member 200 pushes the second link support shafts 144, 145 of the second rear link 140 rearward, and the second lower slide surface 136 of the first rear link 110 pushes the second slide shaft 147 of the second rear link 140 upward. As a result, the second rear link 140 is displaced to rise. Accordingly, the rear end portion of the fixation bracket 70 supported by the second rear link 140 is lifted up. Thus, the movable panel 40 tilts up. When the movable panel 40 tilts up, a space is formed between the movable panel 40 and the guide rail 60 in the up-down direction. Thus, even when the first rear link 110 rotates in the rising direction thereof, the first rear link 110 does not come into contact with the movable panel 40. As described above, in the case where the power transmission member 200 moves toward the rear side, the second link support shafts 144, 145 move toward the rear side, which is the movement direction of the power transmission member 200. On the other hand, the second rear link 140 rotates about the axis of each of the second link support shafts 144, 145.

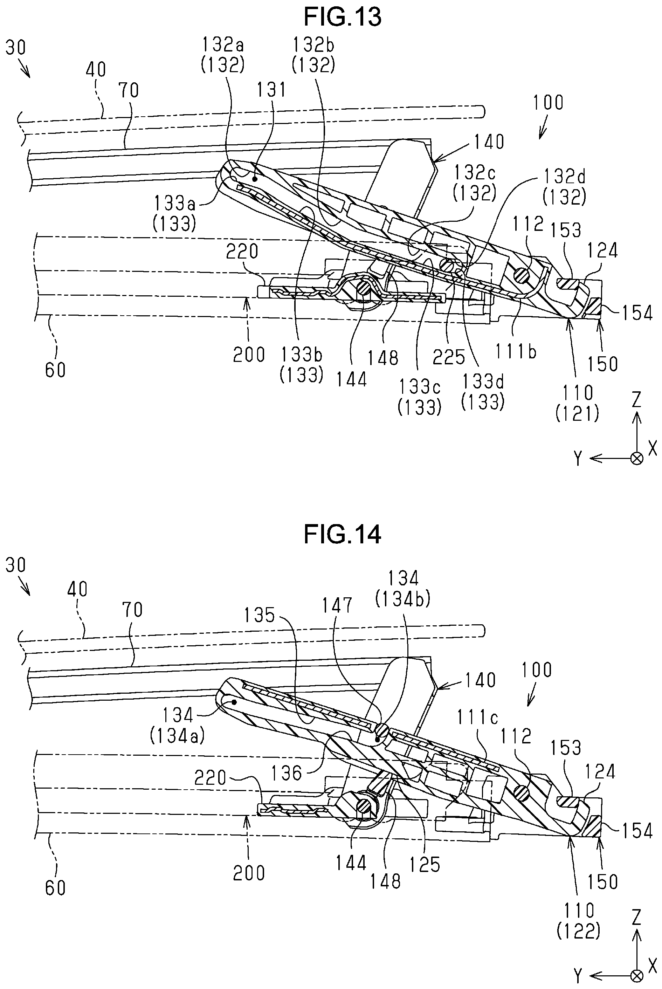

As shown in FIGS. 13 and 14, when the drive shoe 80 moves to the tilt-up corresponding position, the power transmission member 200 further moves rearward from the state shown in each of FIGS. 11 and 12. After the drive shoe 80 has moved to the tilt-up corresponding position, the power transmission member 200 does not move rearward even when the drive shoe 80 moves rearward. Thus, the position of the power transmission member 200 shown in each of FIGS. 13 and 14 is the rearmost movement position in the movement range thereof in the front-rear direction.

As shown in FIG. 13, when the power transmission member 200 moves to the rearmost position, the first slide shaft 225 of the power transmission member 200 moves to the second end portion of the first slide groove 131 of the first rear link 110. Thus, the first slide shaft 225 of the power transmission member 200 is in contact with the fourth surface 132d of the first slide groove 131. As a result, the first rear link 110 assumes the maximally rising posture. In the following description, as shown in FIG. 13, a position at which the first rear link 110 has risen is referred to as a "first rising position". In a case where the first rear link 110 is located at the first rising position, the inclination of the first slide groove 131 of the first rear link 110 with respect to the front-rear direction is maximized. At this time, the fourth surfaces 132d, 133d of the first slide groove 131 of the first rear link 110 extend in the front-rear direction.

As shown in FIG. 14, when the power transmission member 200 moves to the rearmost position, the second rear link 140 also moves to the rearmost position in the movement range thereof in the front-rear direction. In addition, the second slide shaft 147 of the second rear link 140 moves to the second end portion of the second slide groove 134 of the first rear link 110. As a result, the second rear link 140 assumes the maximally rising posture. In the following description, as shown in FIG. 14, a position at which the second rear link 140 has risen is referred to as a "second rising position". In a case where the second rear link 140 is located at the second rising position, the distal end of the second rear link 140 is lifted up to the highest position. Thus, the rear end portion of the fixation bracket 70 supported by the second rear link 140 is also lifted up to the highest position. As a result, the tilting-up of the movable panel 40 is completed, and the movable panel 40 is arranged at the tilt-up position. In these respects, the first rising position of the first rear link 110 is a position at which the second rear link 140 is caused to be arranged at the second rising position, and the second rising position of the second rear link 140 is a position at which the movable panel 40 is caused to be arranged at the tilt-up position.

As shown in FIG. 13, in the case where the first rear link 110 is located at the first rising position, a portion of the first rear link 110 protrudes upward with respect to the upper edge of the guide rail 60. Likewise, as shown in FIG. 14, in the case where the second rear link 140 is located at the second rising position, a portion of the second rear link 140 protrudes upward with respect to the upper edge of the guide rail 60. At this time, the second slide shaft 147 of the second rear link 140 is located on an upper side of the upper edge of the guide rail 60.

In the state shown in FIG. 14, the second slide shaft 147 of the second rear link 140 is located in the second slide groove 134 of the first rear link 110. At this time, the upright groove 134b of the first rear link 110 extends upward from the end portion of the lateral groove 134a closer to the rotation axis of the first rear link 110. Here, extending upward means not only that the upright groove 134b extends along the up-down direction, but also that the upright groove 134b extends along a direction slightly inclined with respect to the up-down direction. However, the inclination of the upright groove 134b with respect to the front-rear direction is larger than the inclination of the lateral groove 134a with respect to the front-rear direction. In addition, a portion of the second slide shaft 147 of the second rear link 140 slightly protrudes from the second slide groove 134 of the first rear link 110.

An angle of the first rear link 110 with respect to the guide rail 60, that is, an angle formed between the longer direction of the guide rail 60 and the longer direction of the first rear link 110 is defined as a rising angle of the first rear link 110. In addition, an angle of the second rear link 140 with respect to the guide rail 60, that is, an angle formed between the longer direction of the guide rail 60 and the longer direction of the second rear link 140 is defined as a rising angle of the second rear link 140. As shown in FIGS. 13 and 14, the rising angle of the second rear link 140 at the second rising position is an angle close to perpendicular, as compared with the rising angle of the first rear link 110 at the first rising position.

Next, operation at the time when the sunroof apparatus 30 tilts down the movable panel 40 will be briefly described.

In a case where the movable panel 40 is caused to tilt down from the tilt-up position, the drive shoe 80 is caused to move frontward from the tilt-up corresponding position. In a case where the drive shoe 80 moves frontward from the tilt-up corresponding position, the power transmission member 200 moves frontward together with the drive shoe 80. Then, the first slide shaft 225 of the power transmission member 200 slides on the first lower slide surface 133 of the first rear link 110, whereby the first rear link 110 rotates to tilt down from the first rising position. Specifically, the first slide shaft 225 of the power transmission member 200 sequentially slides on the fourth surface 133d, the third surface 133c, the second surface 133b, and the first surface 133a of the first rear link 110, whereby the first rear link 110 rotates to tilt down from the first rising position. In addition, in the case where the drive shoe 80 moves frontward from the tilt-up corresponding position, the second rear link 140 moves frontward together with the power transmission member 200. At this time, the second slide shaft 147 of the second rear link 140 slides on the second upper slide surface 135 of the first rear link 110, whereby the second rear link 140 rotates to tilt down from the second rising position. When the drive shoe 80 moves to the full-closing corresponding position, the first rear link 110 is located at the first tilted-down position, and the second rear link 140 is located at the second tilted-down position, as shown in FIGS. 9 and 10. As a result, the movable panel 40 is arranged at the fully-closing position.

Accordingly, in a case where the power transmission member 200 moves frontward, the first link support shafts 123 do not move in the movement direction of the power transmission member 200. On the other hand, the first rear link 110 rotates about the axis of each of the first link support shafts 123. In addition, in a case where the power transmission member 200 moves rearward, the second link support shafts 144, 145 move in the movement direction of the power transmission member 200. On the other hand, the second rear link 140 rotates about the axis of each of the second link support shafts 144, 145.

Next, operation at the time when the movable panel 40 of the sunroof apparatus 30 operates in the front-rear direction will be briefly described.

In the sunroof apparatus 30, in a case where the drive shoe 80 moves between the tilt-up corresponding position and the full-opening corresponding position, the power of the drive shoe 80 is transmitted to the front support part 90, and the power of the drive shoe 80 is not transmitted to the power transmission member 200. That is, the front support part 90 moves in the front-rear direction while the postures of the first rear link 110 and the second rear link 140 are not changed.

Specifically, in a case where the drive shoe 80 moves rearward from the tilt-up corresponding position toward the full-opening corresponding position, the front support part 90 moves rearward together with the fixation bracket 70. At this time, the fixation bracket 70 moves rearward while sliding on the two guide shafts 146 of the second rear link 140. The movable panel 40 moves rearward together with the fixation bracket 70. When the drive shoe 80 moves to the full-opening corresponding position, the movable panel 40 is arranged at the fully-opening position. On the other hand, in a case where the drive shoe 80 moves frontward from the full-opening corresponding position toward the tilt-up corresponding position, the front support part 90 moves frontward together with the fixation bracket 70. At this time, the fixation bracket 70 moves frontward while sliding on the two guide shafts 146 of the second rear link 140. The movable panel 40 moves frontward together with the fixation bracket 70. When the drive shoe 80 moves to the tilt-up corresponding position, the movable panel 40 is arranged at the fully-opening position.

### <Effects of First Embodiment>

(1-1) In the sunroof apparatus 30, the power transmission member 200 causes the first rear link 110 to rotate. In addition, the first rear link 110 cause the second rear link 140 to rotate. Thus, the sunroof apparatus 30 allows the rotation amount of the second rear link 140 to easily increase without increasing the load of the power transmission member 200, as compared with a comparative example in which the power transmission member 200 directly causes the second rear link 140 to rotate. Accordingly, even in a case where the second rear link 140 is tilted down to be along the guide rail 60 in a state where the movable panel 40 is caused to be arranged at the fully-closing position, the sunroof apparatus 30 can cause the second rear link 140 to rise from the guide rail 60 when the sunroof apparatus 30 attempts to cause the movable panel 40 to be arranged at the tilt-up position. Therefore, in the sunroof apparatus 30, it is possible to reduce a thickness of the apparatus in the up-down direction formed when the movable panel 40 is caused to be arranged at the fully-closing position.

(1-2) In a case where degrees of freedom of the first rear link 110 and the second rear link 140 are only degrees of freedom in rotation, the operation amount of the second rear link 140 tends to be relatively small. In contrast, in the sunroof apparatus 30, at least one of the first rear link 110 or the second rear link 140 has a degree of freedom allowing movement in the front-rear direction. Specifically, the second rear link 140 has a degree of freedom allowing movement in the front-rear direction. Thus, in the sunroof apparatus 30, it is possible to relatively increase the operation amount of the second rear link 140. As a result, in the sunroof apparatus 30, it is possible to easily secure the lifted amount of the rear end portion of the movable panel 40, when the movable panel 40 is arranged at the tilt-up position.

(1-3) In the sunroof apparatus 30, when the power transmission member 200 moves in the front-rear direction, forces are transmitted to the second rear link 140 from both the power transmission member 200 and the first rear link 110. That is, two forces act on the second rear link 140. Thus, at the time of designing the sunroof apparatus 30, by adjusting a position at which the power transmission member 200 causes the force to act on the second rear link 140 and a position at which the first rear link 110 causes the force to act on the second rear link 140, it is possible to cause the second rear link 140 to easily rotate.

(1-4) In a case where the movable panel 40 is arranged at the fully-closing position, the first rear link 110 is located at the first tilted-down position at which the first rear link 110 is tilted down with respect to the guide rail 60. In this case, an amount of upward protrusion of the first rear link 110 with respect to the guide rail 60 decreases. On the other hand, in a case where the movable panel 40 is arranged at the tilt-up position, the first rear link 110 is located at the first rising position at which the first rear link 110 has risen with respect to the guide rail 60. In this case, the amount of upward protrusion of the first rear link 110 with respect to the guide rail 60 increases. That is, in the sunroof apparatus 30, since an engagement position between the first rear link 110 and the second rear link 140 through the second slide shaft 147 and the second slide groove 134 is easily arranged upward, it is possible to easily increase the rising amount of the second rear link 140 at the second rising position. In other words, when the sunroof apparatus 30 arranges the second rear link 140 at the second rising position, the sunroof apparatus 30 easily arranges the rear end portion of the fixation bracket 70, supported by the second rear link 140, further upward. Thus, in the sunroof apparatus 30, it is possible to reduce a thickness of the apparatus in the up-down direction formed when the movable panel 40 is arranged at the fully-closing position, while securing the tilt-up amount of the movable panel 40. For example, in the sunroof apparatus 30, it is possible to reduce a thickness of the apparatus in the up-down direction formed due to the first rear link 110, as compared with a comparative example in which the first rear link 110 is fixed to the guide rail 60.

(1-5) Power is transmitted from the power transmission member 200 to the first rear link 110 via the first slide shaft 225 and the first slide groove 131. Likewise, power is transmitted from the first rear link 110 to the second rear link 140 via the second slide shaft 147 and the second slide groove 134. Therefore, in the sunroof apparatus 30, it is possible to cause a configuration that transmits power from the power transmission member 200 to the first rear link 110 to be similar to a configuration that transmits power from the first rear link 110 to the second rear link 140.

In addition, a comparative example will be considered in which the power transmission member 200 has a configuration corresponding to the first slide groove 131 and the first rear link 110 has a configuration corresponding to the first slide shaft 225. In this comparative example, the power transmission member 200 is a member that moves substantially in the front-rear direction. Thus, since the first slide groove 131 is provided in the power transmission member 200, the thickness, in the up-down direction, of the power transmission member 200 tends to increase, and the thickness, in the up-down direction, of the guide rail 60 accommodating the power transmission member 200 tends to increase. Therefore, in the sunroof apparatus 30, it is possible to reduce an increase in thickness of the apparatus in the up-down direction, as compared with the comparative example described above.

(1-6) In the first rear link 110, the first slide groove 131 and the second slide groove 134 are provided in the covering portion 120 made of a resin material. Thus, in the sunroof apparatus 30, it is possible to increase a degree of freedom in the shapes of the first slide groove 131 and the second slide groove 134, as compared with a case in which configurations corresponding to the first slide groove 131 and the second slide groove 134 are provided in the base portion 111a. In addition, in the case of a comparative example in which configurations corresponding to the first slide groove 131 and the second slide groove 134 are provided by providing holes in the base portion 111a of the first rear link 110, the first rear link 110 tends to increase in its size. In this respect, in the sunroof apparatus 30, it is possible to reduce an increase in size of the first rear link 110, as compared with the comparative example described above.

(1-7) The first rear link 110 is arranged between the holding wall 223 of the power transmission member 200 and the second rear link 140 in the width direction. Thus, in the sunroof apparatus 30, it is possible to densely arrange a configuration that transmits power from the power transmission member 200 to the first rear link 110 and a configuration that transmits power from the first rear link 110 to the second rear link 140, in the width direction. Therefore, in the sunroof apparatus 30, it is possible to reduce an increase in size of the rear support part 100 in the width direction.

(1-8) When the vehicle 10 travels in a state where the movable panel 40 is arranged at the tilt-up position, a load in the up-down direction may temporarily or periodically act on the movable panel 40. Such a load can be transmitted to the second rear link 140 via the movable panel 40 and the fixation bracket 70. In this respect, as shown in FIG. 14, in a state where the movable panel 40 is arranged at the tilt-up position, the second slide shaft 147 of the second rear link 140 is placed in the upright groove 134b extending in the up-down direction. Thus, when the load described above acts, the second slide shaft 147 of the second rear link 140 attempts to move along the upright groove 134b. That is, the load described above is less likely to be transmitted from the second rear link 140 to the first rear link 110 via the second slide shaft 147. Thus, the sunroof apparatus 30 can restrict the movement of the movable panel 40 from the tilt-up position, in a case where the load in the up-down direction acts on the movable panel 40 arranged at the tilt-up position.

(1-9) In the sunroof apparatus 30, when the length of the upright groove 134b of the first rear link 110 is increased, it is easy to increase the rising amount of the second rear link 140 when the second rear link 140 is arranged at the second rising position. In this respect, in the sunroof apparatus 30, since the upright groove 134b of the first rear link 110 penetrates the second rib 122 in the up-down direction, it is possible to increase the length of the upright groove 134b without increasing a thickness of the first rear link 110 in a direction in which the upright groove 134b extends.

(1-10) As shown in FIG. 14, in a case where the first rear link 110 is located at the first rising position and the second rear link 140 is located at the second rising position, the engagement protrusion portion 148 of the second rear link 140 is fitted into the engagement recess portion 125 of the first rear link 110. Specifically, in the width direction, the engagement recess portion 125 of the first rear link 110 nips the engagement protrusion portion 148 of the second rear link 140. Thus, when the movable panel 40 is arranged at the tilt-up position, the first rear link 110 and the second rear link 140 are less likely to move relative to each other in the width direction. Therefore, the sunroof apparatus 30 can restrict unexpected movement of the movable panel 40 from the tilt-up position caused due to the relative movement between the first rear link 110 and the second rear link 140 in the width direction.

(1-11) As viewed in the width direction, in a case where the rotation axis of the first rear link 110 is located above the upper edge of the guide rail 60, the first rear link 110 is likely to protrude upward with respect to the guide rail 60. On the other hand, as viewed in the width direction, in a case where the rotation axis of the first rear link 110 is located below the lower edge of the guide rail 60, the first rear link 110 is likely to protrude downward with respect to the guide rail 60. In these respects, as shown in FIG. 9, the rotation axis of the first rear link 110, which is also the axis of the pin 112, is located below the upper edge of the guide rail 60 and above the lower edge of the guide rail 60. To be precise, the rotation axis of the first rear link 110 is located below a rearwardly extended line of the upper edge of the guide rail 60 and above a rearwardly extended line of the lower edge of the guide rail 60. Thus, the first rear link 110 located at the first tilted-down position is less likely to protrude upward and downward with respect to the guide rail 60. As a result, in the sunroof apparatus 30, it is possible to further reduce a thickness of the apparatus in the up-down direction formed when the movable panel 40 is arranged at the fully-closing position.

(1-12) In a case where the first rear link 110 is located at the first tilted-down position as shown in FIGS. 9 and 10, the hook 124 of the first rear link 110 is locked to the second connection wall 154 of the link support portion 150. Therefore, the sunroof apparatus 30 can stabilize the posture of the first rear link 110 at the first tilted-down position.

(1-13) The posture of the second rear link 140 assumed when the drive shoe 80 moves from the full-closing corresponding position to the tilt-up corresponding position changes in accordance with the inclinations of the first slide groove 131 and the second slide groove 134 of the first rear link 110. Thus, at a design stage, by changing the inclinations of the first slide groove 131 and the second slide groove 134, it is possible to freely select a change in the posture of the second rear link 140 with respect to the amount of movement of the drive shoe 80. That is, it is possible to freely select a change in the position of the movable panel 40 with respect to the amount of movement of the drive shoe 80.

(1-14) As shown in FIG. 9, in a case where the drive shoe 80 is located at the full-closing corresponding position, the first slide shaft 225 of the power transmission member 200 is located at the first end portion of the first slide groove 131 of the first rear link 110 located at the first tilted-down position. That is, the first slide shaft 225 of the power transmission member 200 is in contact with the first surfaces 132a, 133a of the first slide groove 131 of the first rear link 110. Here, the first surfaces 132a, 133a of the first rear link 110 extend in the front-rear direction, which is the longer direction of the guide rail 60. Thus, even if the position of the power transmission member 200 at the time when the drive shoe 80 is caused to move to the full-closing corresponding position is slightly shifted from the proper position, a state is easily maintained in which the first slide shaft 225 of the power transmission member 200 is in contact with the first surfaces 132a, 133a of the first slide groove 131. Therefore, when the sunroof apparatus 30 causes the movable panel 40 to be arranged at the fully-closing position, the sunroof apparatus 30 can cause the first rear link 110 to be arranged at the first tilted-down position, regardless of the positional shifts of the drive shoe 80 and the power transmission member 200.

(1-15) As shown in FIG. 13, in a case where the drive shoe 80 is located at the tilt-up corresponding position, the first slide shaft 225 of the power transmission member 200 is located at the second end portion of the first slide groove 131 of the first rear link 110 located at the first rising position. That is, the first slide shaft 225 of the power transmission member 200 is in contact with the fourth surfaces 132d, 133d of the first slide groove 131 of the first rear link 110. Here, the fourth surfaces 132d, 133d of the first rear link 110 extend in the front-rear direction, which is the longer direction of the guide rail 60. Thus, even if the position of the power transmission member 200 at the time when the drive shoe 80 is caused to move to the tilt-up corresponding position is slightly shifted from the proper position, a state is easily maintained in which the first slide shaft 225 of the power transmission member 200 is in contact with the fourth surfaces 132d, 133d of the first slide groove 131. Therefore, when the sunroof apparatus 30 causes the movable panel 40 to be arranged at the tilt-up position, the sunroof apparatus 30 can cause the first rear link 110 to be arranged at the first rising position, regardless of the positional shifts of the drive shoe 80 and the power transmission member 200.

(1-16) In a case where the first rear link 110 is arranged at the first tilted-down position, the first rear link 110 is located on the lower side of the upper edge of the guide rail 60. Likewise, in a case where the second rear link 140 is arranged at the second tilted-down position, the second rear link 140 is located on the lower side of the upper edge of the guide rail 60. Thus, in the sunroof apparatus 30, in a case where the movable panel 40 is arranged at the fully-closing position, it is possible to reduce an increase in thickness of the apparatus in the up-down direction caused by the first rear link 110 and the second rear link 140.

(1-17) The second link support shafts 144, 145 of the second rear link 140 are sandwiched in the up-down direction between the corresponding one of the first recess portion 226 and the second recess portion 227 of the power transmission member 200 and the bottom wall 61 of the guide rail 60. Thus, the second rear link 140 is movable in the front-rear direction along the guide rail 60, and is rotatable about an axis extending in the width direction. That is, in the sunroof apparatus 30, it is possible to simplify a supporting mode of the second rear link 140.

(1-18) For example, in a case where the power transmission member 200 and the first rear link 110 are separated from each other in the width direction, efficiency in power transmission from the power transmission member 200 to the first rear link 110 is likely to decrease. In contrast, in the sunroof apparatus 30 of the first embodiment, the portions, related to power transmission, in the power transmission member 200 and the first rear link 110 are adjacent to each other in the width direction. Thus, in the sunroof apparatus 30, it is possible to prevent a decrease in efficiency in power transmission from the power transmission member 200 to the first rear link 110. Likewise, in the sunroof apparatus 30, it is possible to prevent decreases in efficiency in power transmission from the power transmission member 200 to the second rear link 140 and efficiency in power transmission from the first rear link 110 to the second rear link 140.

(1-19) In a case where a load in the up-down direction acts on the movable panel 40 in a state where the movable panel 40 is arranged at the tilt-up position, the load is transmitted to the second rear link 140 supporting the movable panel 40 through the fixation bracket 70. In this respect, as shown in FIGS. 13 and 14, in the state where the movable panel 40 is arranged at the tilt-up position, the rising angle of the second rear link 140 with respect to the longer direction of the guide rail 60 is an angle close to perpendicular, as compared with the rising angle of the first rear link 110 with respect to the longer direction of the guide rail 60. Specifically, a line segment connecting the center of each of the guide shafts 146 and the center of each of the second link support shafts 144, 145 of the second rear link 140 extends in a substantially up-down direction. Thus, in a case where the load described above is transmitted to the second rear link 140, large torque for rotating the second rear link 140 is less likely to be generated in the second rear link 140. As a result, in the sunroof apparatus 30, it is possible to reduce torque generated in the second rear link 140, when the load in the up-down direction acts on the movable panel 40 arranged at the tilt-up position.

(1-20) As shown in FIGS. 13 and 14, the entire length of the first rear link 110 is longer than the entire length of the second rear link 140. Thus, it is possible to keep the first slide groove 131 of the first rear link 110 away from the rotation center of the first rear link 110. As a result, the distance between a portion at which the first slide shaft 225 of the power transmission member 200 pushes the first rear link 110 and the rotation center of the first rear link 110 is long. Therefore, in the sunroof apparatus 30, it is possible to increase efficiency in power transmission from the first slide shaft 225 of the power transmission member 200 to the first rear link 110.

Further, a rotation angle about the axis of the first link support shaft 123 formed when the first rear link 110 is displaced from the first tilted-down position to the first rising position is smaller than a rotation angle about the axis of each of the second link support shafts 144, 145 formed when the second rear link 140 is displaced from the second tilted-down position to the second rising position. Thus, even when the entire length of the first rear link 110 is increased, the first rear link 110 arranged at the first rising position hardly interferes with the movable panel 40 arranged at the tilt-up position.

### <Second Embodiment>

A sunroof apparatus 30A according to a second embodiment will be described. As compared with the first embodiment, the second embodiment is different from the first embodiment mainly in configurations of a rear support part 300 and a power transmission member 350. Thus, configurations different from those of the first embodiment will be described in detail. For configurations common to those of the first embodiment, the same reference signs or the same names will be given, and description thereof will be omitted.

### <Configuration of Second Embodiment>

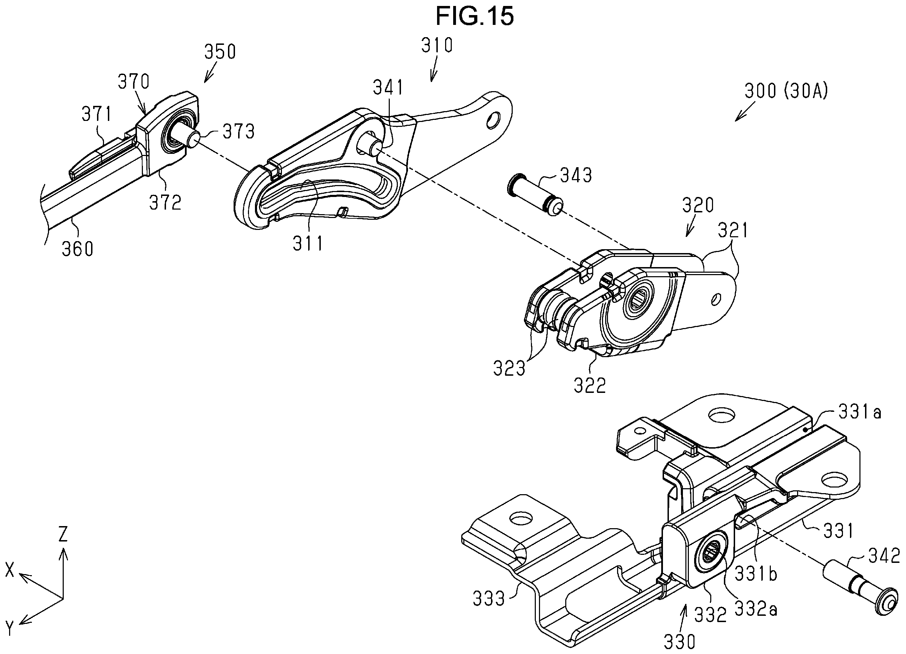

As shown in FIGS. 15 to 17, the rear support part 300 of the sunroof apparatus 30A includes a first rear link 310, a second rear link 320, a link support portion 330, a connection shaft 341, a first link support shaft 342, and a second link support shaft 343.

The first rear link 310 has a flat plate shape. The plate thickness direction of the first rear link 310 coincides with the width direction. The first rear link 310 has a first slide groove 311 penetrating the first rear link 310 in the width direction. The first slide groove 311 has an arc shape as viewed in the width direction. **In** the state shown in each of FIGS. 15 to 17, the first slide groove 311 is gently curved downward toward the rear side.

The second rear link 320 includes two link plates 321, a connection plate 322 connecting the two link plates 321 to each other, and two guide shafts 323 respectively protruding from the two link plates 321. Each of the two link plates 321 has a plate shape. Each of the respective plate thickness directions of the two link plates 321 coincides with the width direction. The two link plates 321 are integrated by the connection plate 322. One of the guide shafts 323 protrudes outward from a distal end portion of the link plate 321 located inward in the width direction. The other one of the guide shafts 323 protrudes inward from a distal end portion of the link plate 321 located outward in the width direction. That is, the two guide shafts 323 protrude in directions approaching each other in the width direction. In the width direction, a gap exists between the two guide shafts 323.

As viewed in the width direction, when the first rear link 310 and the second rear link 320 are compared with each other, the entire length of the first rear link 310 is longer than the entire length of the second rear link 320. Here, each of the entire length of the first rear link 310 and the entire length of the second rear link 320 is sufficient as long as the entire length is the entire length as a shape. In this case, the entire length of the first rear link 310 is a distance from a proximal end to a distal end of the first rear link 310, and the entire length of the second rear link 320 is a distance from a proximal end to a distal end of the second rear link 320. In addition, each of the entire length of the first rear link 310 and the entire length of the second rear link 320 may be the entire length as a function. In this case, the entire length of the first rear link 310 is a distance from the rotation center of the first rear link 310 to a front end of the first slide groove 311 of the first rear link 310, and the entire length of the second rear link 320 is a distance from the rotation center of the first rear link 310 to the center of each of the two guide shafts 323.

The link support portion 330 includes a first support portion 331 supporting the first rear link 310, a second support portion 332 supporting the second rear link 320, and a rail-fixed portion 333 fixed to the guide rail 60.

The first support portion 331 has a slit 331a extending downward from an upper surface of the first support portion 331, and a third slide groove 331b penetrating the first support portion 331 in the width direction. The slit 331a extends in the front-rear direction as viewed from above, and extends downward as viewed from the rear side. The slit 331a includes a portion having a width substantially equal to the plate thickness of the first rear link 310, and a portion having a width larger than the plate thickness of the first rear link 310. The third slide groove 331b penetrates the first support portion 331 in the width direction. In this respect, the third slide groove 331b is connected to the slit 331a. The third slide groove 331b extends in the front-rear direction as viewed in the width direction. That is, the third slide groove 331b is a long hole. The second support portion 332 is located at a position inward of the first support portion 331 in the width direction and frontward of the first support portion 331. The second support portion 332 has a support hole 332a penetrating the second support portion 332 in the width direction. A position at which the support hole 332a is formed is located frontward relative to a position at which the third slide groove 331b is formed. The rail-fixed portion 333 extends frontward from a front end of the first support portion 331.

The connection shaft 341 has a cylindrical shape. The connection shaft 341 connects a central portion in the longer direction of the first rear link 310 and a central portion in the longer direction of the second rear link 320 to each other. Thus, the first rear link 310 and the second rear link 320 are rotatable relative to each other about an axis of the connection shaft 341. A portion, in the first rear link 310, to which the connection shaft 341 is connected and a portion, in the second rear link 320, to which the connection shaft 341 is connected are adjacent to each other in the width direction. That is, a portion, in the first rear link 310, that transmits power to the second rear link 320 and a portion, in the second rear link 320, to which the power is transmitted from the first rear link 310 are adjacent to each other in the width direction. Here, the state of being adjacent to each other in the width direction means a state in which the portion in the first rear link 310 described above and the portion in the second rear link 320 described above are close to each other in the width direction, and in which another member does not exist between these portions.

The first link support shaft 342 has a cylindrical shape. The first link support shaft 342 extends inward and outward in the width direction from the proximal end portion of the first rear link 310. The first link support shaft 342 is a rotation shaft of the first rear link 310. The first link support shaft 342 is supported by the link support portion 330. Specifically, both end portions of the first link support shaft 342 are placed in the third slide groove 331b of the link support portion 330. At this time, the first rear link 310 is placed in the slit 331a of the link support portion 330. Thus, the first rear link 310 is rotatable relative to the link support portion 330 about an axis of the first link support shaft 342. Further, the first rear link 310 is movable, together with the first link support shaft 342, with respect to the link support portion 330 in the front-rear direction, which is an extending direction of the third slide groove 331b. Note that in a case where the first rear link 310 rotates, or moves in the front-rear direction, the first link support shaft 342 slides on an inner surface of the third slide groove 331b. In the following description, since the first link support shaft 342 and the first rear link 310 are integrally configured, the first link support shaft 342 is also referred to as a first link support shaft 342 of the first rear link 310.

The second link support shaft 343 has a cylindrical shape. The second link support shaft 343 extends in the width direction from the proximal end portion of the second rear link 320. The second link support shaft 343 is a rotation shaft of the second rear link 320. The second link support shaft 343 is supported by the link support portion 330. Specifically, both end portions of the second link support shaft 343 are received in the support hole 332a of the link support portion 330. Thus, the second rear link 320 is rotatable about an axis of the second link support shaft 343 with respect to the link support portion 330. On the other hand, the second rear link 320 and the second link support shaft 343 are not movable in the front-rear direction with respect to the link support portion 330, unlike the first rear link 310.

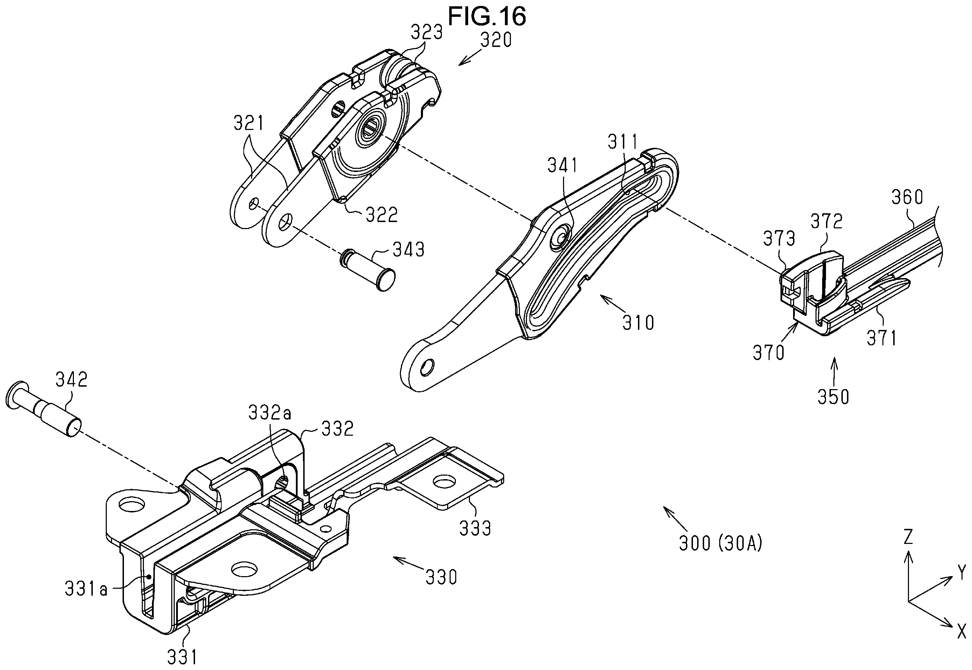

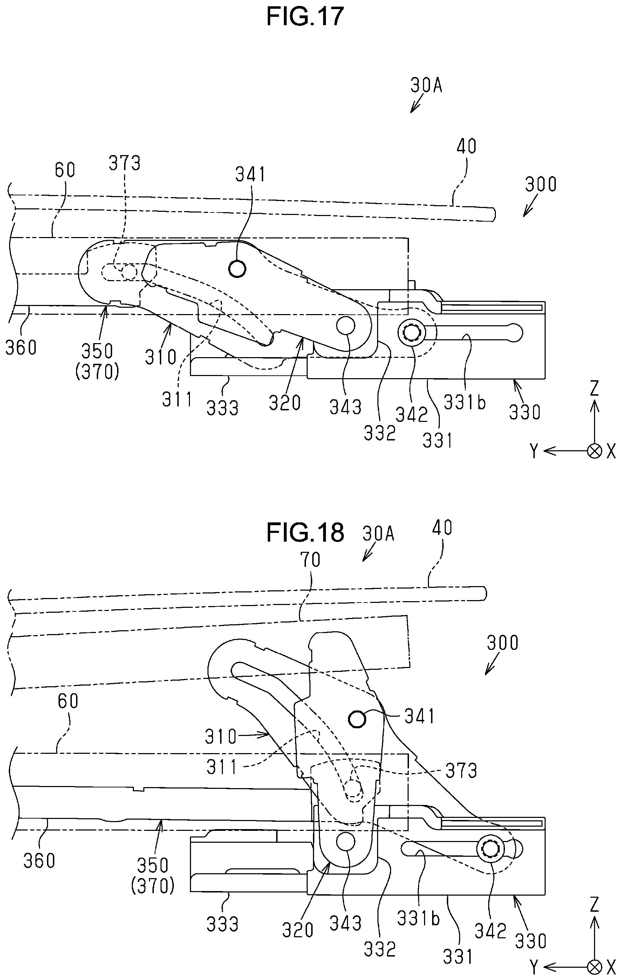

As shown in FIG. 17, the position of the first link support shaft 342 in the up-down direction and the position of the second link support shaft 343 in the up-down direction are equivalent to each other. That is, the first link support shaft 342 and the second link support shaft 343 projected onto a rear side at least partially overlap each other as viewed in the width direction. As shown in FIG. 16, each of the first link support shaft 342 and the second link support shaft 343 has a head portion and a shaft portion. In this respect, to be more precise, it can be said that the shaft portion of the first link support shaft 342 projected onto the rear side and the shaft portion of the second link support shaft 343 projected onto the rear side at least partially overlap each other.

As shown in FIG. 17, the rear support part 300 is fixed to the rear end portion of the guide rail 60. Specifically, the rail-fixed portion 333 of the link support portion 330 of the rear support part 300 is fixed to the bottom wall 61 of the guide rail 60. For fixing the rear support part 300, a fastening member such as a screw or a bolt is preferably used. At this time, the distal end portion of the first rear link 310 and the distal end portion of the second rear link 320 are arranged between the inner wall 62 and the outer wall 63 of the guide rail 60. On the other hand, the proximal end portion of the first rear link 310 and the proximal end portion of the second rear link 320 are arranged on a lower side of the bottom wall 61 of the guide rail 60. In these respects, the bottom wall 61 of the guide rail 60 is preferably provided with a through hole or the like in order to avoid interference with the first rear link 310 and the second rear link 320. In addition, although not shown in FIG. 17, the distal end portion of the second rear link 320 supports the fixation bracket 70. At this time, the two guide shafts 323 of the second rear link 140 sandwich the fixation bracket 70 in the width direction.

As shown in FIGS. 15 and 16, the power transmission member 350 of the sunroof apparatus 30A includes a rod 360 and a rear shoe 370.

The rear shoe 370 includes a slide block 371, a holding wall 372, and a first slide shaft 373. The slide block 371 extends outward in the width direction from a rear end portion of the rod 360. The holding wall 372 extends from the rear end portion of the rod 360. The holding wall 372 has a plate shape. The plate thickness direction of the holding wall 372 coincides with the width direction. When the holding wall 372 is viewed in its plate thickness direction, an upper surface of the holding wall 372 has an arc shape. The first slide shaft 373 has a cylindrical shape. The first slide shaft 373 extends inward in the width direction from the holding wall 372.

The power transmission member 350 is accommodated in the guide rail 60. Specifically, many of the components of the power transmission member 350 are arranged between the bottom wall 61 and the third inner wall 62c of the guide rail 60 or between the bottom wall 61 and the third outer wall 63c of the guide rail 60. Thus, the movement of the power transmission member 350 in a direction orthogonal to the longer direction with respect to the guide rail 60 is restricted. A distal end portion of the first slide shaft 373 is placed in the first slide groove 311 of the first rear link 310 of the rear support part 300. That is, in a case where the power transmission member 350 moves in the front-rear direction, the first slide shaft 373 slides on an inner surface of the first slide groove 311.

A portion, in the power transmission member 350, in which the first slide shaft 373 extends and a portion, in the first rear link 310, in which the first slide groove 311 is provided are adjacent to each other in the width direction. That is, a portion, in the power transmission member 350, that transmits power to the first rear link 310 and a portion, in the first rear link 310, to which the power is transmitted from the power transmission member 350 are adjacent to each other in the width direction. Here, the state of being adjacent to each other in the width direction means a state in which the portion in the power transmission member 350 described above and the portion in the first rear link 310 described above are close to each other in the width direction, and in which another member does not exist between these portions.

### <Operation of Second Embodiment>

Operation of the sunroof apparatus 30A when the movable panel 40 is caused to tilt up will be described with reference to FIGS. 17 and 18.

In a case where the drive shoe 80 is located at the full-closing corresponding position, the power transmission member 350 is located at the frontmost position in a movement range in the front-rear direction, as shown in FIG. 17. Thus, the first slide shaft 373 of the power transmission member 350 is located in the vicinity of the front end of the first slide groove 311 of the first rear link 310. In addition, the first link support shaft 342 of the first rear link 310 is located in the vicinity of a front end of the third slide groove 331b of the link support portion 330. Further, the first rear link 310 is tilted down to be along the guide rail 60. That is, the first rear link 310 is located at the first tilted-down position. On the other hand, the second rear link 320 connected to the first rear link 310 through the connection shaft 341 is tilted down to be along the guide rail 60, similarly to the first rear link 310. That is, the second rear link 320 is located at the second tilted-down position. In addition, the first link support shaft 342 is located rearward relative to the second link support shaft 343.

In the following description, an angle of the first rear link 310 with respect to the guide rail 60, that is, an angle formed between the longer direction of the guide rail 60 and the longer direction of the first rear link 310 is referred to as a rising angle of the first rear link 310. In addition, an angle of the second rear link 320 with respect to the guide rail 60, that is, an angle formed between the longer direction of the guide rail 60 and the longer direction of the second rear link 320 is referred to as a rising angle of the second rear link 320.

As described above, in the case where the drive shoe 80 is located at the full-closing corresponding position, the first rear link 310 is located at the first tilted-down position, and the second rear link 320 is located at the second tilted-down position. That is, since the distal end portion of the second rear link 320 is lowered, the rear end portion of the fixation bracket 70 is lowered. As a result, the movable panel 40 is arranged at the fully-closing position. Note that in a case where the first rear link 310 is located at the first tilted-down position, the first rear link 310 is located on a lower side of the upper edge of the guide rail 60. Likewise, in a case where the second rear link 320 is located at the second tilted-down position, the second rear link 320 is located on a lower side of the upper edge of the guide rail 60.

In the second embodiment, in the case where the first rear link 310 is located at the first tilted-down position, the distal end portion of the first rear link 310 is located frontward relative to the proximal end portion of the first rear link 310. Likewise, in the case where the second rear link 320 is located at the second tilted-down position, the distal end portion of the second rear link 320 is located frontward relative to the proximal end portion of the second rear link 320.

In a case where the movable panel 40 is caused to tilt up from the fully-closing position, the actuator 50 causes the drive shoe 80 to move from the full-closing corresponding position to the tilt-up corresponding position. In this case, as shown in FIGS. 17 and 18, the power transmission member 350 moves rearward together with the drive shoe 80. Then, the first slide shaft 373 of the power transmission member 350 slides on the first slide groove 311 of the first rear link 310. In the case where the first rear link 310 is located at the first tilted-down position, the first slide groove 311 is tilted downward with respect to the movement direction of the first slide shaft 373. Thus, a force for causing the first rear link 310 to move rearward and torque for causing the first rear link 310 to rise act on the first rear link 310. That is, power is transmitted from the power transmission member 350 to the first rear link 310 via the first slide groove 311 and the first slide shaft 373.

However, the first rear link 310 is connected through the connection shaft 341 to the second rear link 320 that is not movable in the front-rear direction and that is rotatable only about the axis of the second link support shaft 343. Thus, a portion, in the first rear link 310, to which the connection shaft 341 is connected and a portion, in the second rear link 320, to which the connection shaft 341 is connected are displaced in a similar manner. Therefore, the front-rear position and the rotation angle of the first rear link 310 are uniquely determined by the position of the first slide shaft 373 of the power transmission member 350. In addition, since the first rear link 310 and the second rear link 320 are connected through the connection shaft 341, the rotation angle of the second rear link 320 is also uniquely determined by the position of the first slide shaft 373 of the power transmission member 350.

Therefore, the first rear link 310 rotates about the axis of the first link support shaft 342 while moving rearward together with the first link support shaft 342, in accordance with an amount of rearward movement of the power transmission member 350. That is, the first rear link 310 rises with respect to the guide rail 60 while moving rearward. Here, in a case where the first rear link 310 moves rearward, the first link support shaft 342 moves toward a rear end of the third slide groove 331b of the link support portion 330. In addition, the second rear link 320 rotates about the axis of the second link support shaft 343, in accordance with the positional change of the connection shaft 341. That is, the second rear link 320 rises with respect to the guide rail 60. Thus, the rear end portion of the fixation bracket 70 is lifted up. As a result, the rear end portion of the movable panel 40 is lifted up.

As shown in FIG. 18, when the drive shoe 80 moves to the tilt-up corresponding position, the power transmission member 350 moves to the rearmost position in the movement range in the front-rear direction. Thus, the first slide shaft 373 of the power transmission member 350 moves to the vicinity of a rear end of the first slide groove 311 of the first rear link 310. As a result, the first link support shaft 342 of the first rear link 310 moves to the vicinity of the rear end of the third slide groove 331b of the link support portion 330. Further, the first rear link 310 assumes the maximally rising posture with respect to the guide rail 60. That is, the first rear link 310 is arranged at the first rising position. On the other hand, the second rear link 320 connected to the first rear link 310 through the connection shaft 341 assumes the maximally rising posture with respect to the guide rail 60, similarly to the first rear link 310. That is, the second rear link 320 is arranged at the second rising position.

The rising angle of the second rear link 320 at the second rising position is an angle close to perpendicular, as compared with the rising angle of the first rear link 310 at the first rising position. In other words, the rising angle of the first rear link 310 at the first rising position is an angle close to horizontal, as compared with the rising angle of the second rear link 320 at the second rising position.

As described above, in a case where the drive shoe 80 is located at the tilt-up corresponding position, the first rear link 310 is located at the first rising position, and the second rear link 320 is located at the second rising position. That is, since the distal end portion of the second rear link 320 is lifted up, the rear end portion of the fixation bracket 70 is lifted up. As a result, the movable panel 40 is arranged at the tilt-up position.

Operation of the sunroof apparatus 30A at the time when the movable panel 40 is caused to tilt down will be briefly described.

In a case where the movable panel 40 is caused to tilt down from the tilt-up position, the actuator 50 causes the drive shoe 80 to move from the tilt-up corresponding position to the full-closing corresponding position. In this case, the power transmission member 350 moves frontward together with the drive shoe 80. Then, the first slide shaft 373 of the power transmission member 350 slides on the first slide groove 311 of the first rear link 310. As a result, the first rear link 310 rotates about the axis of the first link support shaft 342 while moving frontward together with the first link support shaft 342. That is, the first rear link 310 tilts down toward the guide rail 60 while moving frontward. In addition, the second rear link 320 rotates about the axis of the second link support shaft 343. That is, the second rear link 320 tilts down toward the guide rail 60. Thus, the first rear link 310 is displaced from the first rising position to the first tilted-down position, and the second rear link 320 is displaced from the second rising position to the second tilted-down position. As a result, the movable panel 40 is arranged at the fully-closing position.

### <Effects of Second Embodiment>

The second embodiment can obtain the following effects in addition to the effects equivalent to effects (1-1) and (1-2) of the first embodiment.

(2-1) A comparative example is assumed in which the second rear link 320 supporting the rear end portion of the movable panel 40 is movable in the front-rear direction and is rotatable. In this case, depending on a rotation direction and a movement direction of the second rear link 320 when the drive shoe 80 moves between the full-closing corresponding position and the tilt-up corresponding position, there is a possibility that an amount of movement of the movable panel 40 in the front-rear direction between the fully-closing position and the tilt-up position increases. In this respect, in the sunroof apparatus 30A of the present embodiment, the second rear link 320 is not movable in the front-rear direction. Thus, when the drive shoe 80 moves between the full-closing corresponding position and the tilt-up corresponding position, the amount of movement of the movable panel 40 in the front-rear direction between the fully-closing position and the tilt-up position is less likely to increase. Therefore, when the sunroof apparatus 30A causes the movable panel 40 to operate between the fully-closing position and the tilt-up position, the sunroof apparatus 30A can cause the rear end portion of the movable panel 40 to be lifted up and lowered while reducing the amount of movement of the movable panel 40 in the front-rear direction.

(2-2) When the drive shoe 80 moves from the full-closing corresponding position to the tilt-up corresponding position, the first rear link 310 rotates from the first tilted-down position to the first rising position. The first rear link 310 rotates because torque is generated in the first rear link 310 by the first slide shaft 373 of the power transmission member 350 pushing the first rear link 310 rearward. Here, the torque generated in the first rear link 310 is a product of a rotation direction component of the first rear link 310 in a force with which the first slide shaft 373 pushes the first rear link 310 and a distance between a portion at which the first slide shaft 373 pushes the first rear link 310 and the rotation center of the first rear link 310.

Thus, in the case of a comparative example in which the first rear link 310 is not movable in the front-rear direction and is rotatable, the distance between the portion at which the first slide shaft 373 pushes the first rear link 310 and the rotation center of the first rear link 310 gradually decreases, as the first rear link 310 rotates toward the first rising position. That is, in the case of the comparative example, it is necessary to increase the force with which the first slide shaft 373 pushes the first rear link 310, as the first rear link 310 rotates toward the first rising position.

In this respect, in the sunroof apparatus 30A of the present embodiment, the first rear link 310 is movable in the front-rear direction and is rotatable. Thus, the first rear link 310 rotates, while moving rearward, when being displaced from the first tilted-down position to the first rising position. Therefore, as the first rear link 310 is displaced toward the first rising position, the distance between the portion at which the first slide shaft 373 pushes the first rear link 310 and the rotation center of the first rear link 310 is less likely to be short. As a result, it is not necessary to increase the force with which the first slide shaft 373 pushes the first rear link 310, as the first rear link 310 is displaced toward the first rising position. Thus, in the sunroof apparatus 30A, it is possible to reduce an increase in size of the actuator 50 or reduce an increase in size of the first rear link 310.

(2-3) In a case where a load in the up-down direction acts on the movable panel 40 in a state where the movable panel 40 is arranged at the tilt-up position, the load is transmitted to the second rear link 320 supporting the movable panel 40 through the fixation bracket 70. In this respect, as shown in FIG. 18, in the state where the movable panel 40 is arranged at the tilt-up position, the rising angle of the second rear link 320 with respect to the longer direction of the guide rail 60 is an angle close to perpendicular, as compared with the rising angle of the first rear link 310 with respect to the longer direction of the guide rail 60. Specifically, a line segment connecting the center of each of the two guide shafts 323 of the second rear link 320 and the center of the second link support shaft 343 extends in a substantially up-down direction. Thus, in a case where the load described above is transmitted to the second rear link 320, torque for causing the second rear link 320 to rotate is less likely to be generated in the second rear link 320. As a result, in the sunroof apparatus 30A, it is possible to reduce torque generated in the second rear link 320, when the load in the up-down direction acts on the movable panel 40 arranged at the tilt-up position.

(2-4) As shown in FIGS. 17 and 18, the first slide shaft 373 of the power transmission member 350 pushes the first rear link 310 in the front-rear direction through the first slide groove 311 to cause the first rear link 310 to rotate. As shown in FIG. 17, in a case where the movable panel 40 is arranged at the fully-closing position, a front end of the first rear link 310 is located frontward relative to a front end of the second rear link 320. Thus, in the sunroof apparatus 30A, it is possible to extend the first slide groove 311 of the first rear link 310 further frontward with respect to the rotation center of the first rear link 310.

When the vehicle 10 is traveling, an upward load in accordance with the traveling speed of the vehicle 10 acts on the movable panel 40. In a case where the movable panel 40 is caused to perform the closing operation while the vehicle 10 is traveling, the upward load acting on the movable panel 40 is the largest when the movable panel 40 moves in the vicinity of the fully-closing position. That is, when the movable panel 40 moves in the vicinity of the fully-closing position, it is necessary to lower the movable panel 40 on which the large upward load acts. In this respect, in the embodiment, the first slide groove 311 of the first rear link 310 extends further frontward with respect to the rotation center of the first rear link 310. Thus, when the movable panel 40 moves in the vicinity of the fully-closing position toward the fully-closing position, the distance between a portion at which the first slide shaft 373 of the power transmission member 350 pushes the first rear link 310 and the rotation center of the first rear link 310 becomes long. Therefore, in the sunroof apparatus 30A, it is possible to reduce the force with which the first slide shaft 373 of the power transmission member 350 pushes the first rear link 310, when the first rear link 310 is displaced toward the first tilted-down position. In other words, the power transmission member 350 can move the first rear link 310 to the fully-closing position with a smaller force.

(2-5) As shown in FIG. 17, in a case where the first rear link 310 is located at the first tilted-down position and the second rear link 320 is located at the second tilted-down position, the first link support shaft 342 is located rearward relative to the second link support shaft 343. That is, the rotation center of the first rear link 310 is located rearward relative to the rotation center of the second rear link 320. Thus, when the movable panel 40 moves in the vicinity of the fully-closing position toward the fully-closing position, the distance between a portion at which the first slide shaft 373 of the power transmission member 350 pushes the first rear link 310 and the rotation center of the first rear link 310 becomes longer. Therefore, in the sunroof apparatus 30A, it is possible to further reduce the force with which the first slide shaft 373 of the power transmission member 350 pushes the first rear link 310, when the first rear link 310 is displaced toward the first tilted-down position.

(2-6) As shown in FIGS. 17 and 18, the entire length of the first rear link 310 is longer than the entire length of the second rear link 320. Thus, it is possible to keep the first slide groove 311 of the first rear link 310 away from the rotation center of the first rear link 310. As a result, the distance between a portion at which the first slide shaft 373 of the power transmission member 350 pushes the first rear link 310 and the rotation center of the first rear link 310 is long. Therefore, in the sunroof apparatus 30A, it is possible to increase efficiency in power transmission from the first slide shaft 373 of the power transmission member 350 to the first rear link 310.

Further, a rotation angle about the axis of the first link support shaft 342 formed when the first rear link 310 is displaced from the first tilted-down position to the first rising position is smaller than a rotation angle about the axis of the second link support shaft 343 formed when the second rear link 320 is displaced from the second tilted-down position to the second rising position. Thus, even when the entire length of the first rear link 310 is increased, the first rear link 310 arranged at the first rising position hardly interferes with the movable panel 40 arranged at the tilt-up position.

(2-7) As shown in FIG. 17, in a state where the movable panel 40 is arranged at the fully-closing position, the first rear link 310 is located on the lower side of the upper edge of the guide rail 60. In addition, in the state where the movable panel 40 is arranged at the fully-closing position, the second rear link 320 is located on the lower side of the upper edge of the guide rail 60. Thus, in the sunroof apparatus 30A, in the case where the movable panel 40 is arranged at the fully-closing position, it is possible to reduce an increase in thickness of the apparatus in the up-down direction caused by the first rear link 310 and the second rear link 320.

(2-8) For example, in a case where the power transmission member 350 and the first rear link 310 are separated from each other in the width direction, efficiency in power transmission from the power transmission member 350 to the first rear link 310 is likely to decrease. In contrast, in the sunroof apparatus 30A of the second embodiment, the portions, related to power transmission, in the power transmission member 350 and the first rear link 310 are adjacent to each other in the width direction. Thus, in the sunroof apparatus 30A, it is possible to prevent a decrease in efficiency in power transmission from the power transmission member 350 to the first rear link 310. Likewise, in the sunroof apparatus 30A, it is possible to prevent a decrease in efficiency in power transmission from the first rear link 310 to the second rear link 320.

(2-9) As viewed in the width direction, in a case where the first link support shaft 342 projected onto a rear side does not overlap the second link support shaft 343, that is, in a case where a large positional misalignment exists between the position of the first link support shaft 342 in the up-down direction and the position of the second link support shaft 343 in the up-down direction, one of the first rear link 310 and the second rear link 320 is arranged to be misaligned with respect to the other in the up-down direction. As a result, the thickness of the apparatus in the up-down direction may increase. In contrast, in the sunroof apparatus 30A of the second embodiment, a lower end portion of the first link support shaft 342 projected onto a rear side overlaps an upper end portion of the second link support shaft 343. Thus, in the sunroof apparatus 30A, it is possible to reduce an increase in thickness of the apparatus in the up-down direction caused due to the positional relationship between the first rear link 310 and the second rear link 320.

(2-10) The rear support part 300 includes the link support portion 330 supporting the first link support shaft 342 and the second link support shaft 343. Thus, in the sunroof apparatus 30A, it is possible to assemble the first link support shaft 342, the second link support shaft 343, the first rear link 310, and the second rear link 320 to the link support portion 330 in advance, at the time of manufacturing the apparatus. In this case, by fixing the link support portion 330 to the guide rail 60, the first link support shaft 342, the second link support shaft 343, the first rear link 310, and the second rear link 320 are positioned with respect to the guide rail 60. In this manner, in the sunroof apparatus 30A, it is possible to increase the manufacturing efficiency of the apparatus.

### <Third Embodiment>

A sunroof apparatus 30B according to a third embodiment will be described. As compared with the second embodiment, the third embodiment is different from the second embodiment mainly in a configuration of a rear support part 400. Thus, configurations different from those of the second embodiment will be described in detail. For configurations common to those of the second embodiment, the same reference signs or the same names will be given, and description thereof will be omitted. In addition, in the third embodiment, a configuration corresponding to the first slide shaft 373 of the power transmission member 350 in the second embodiment is provided as a transmission shaft 374.

### <Configuration of Third Embodiment>

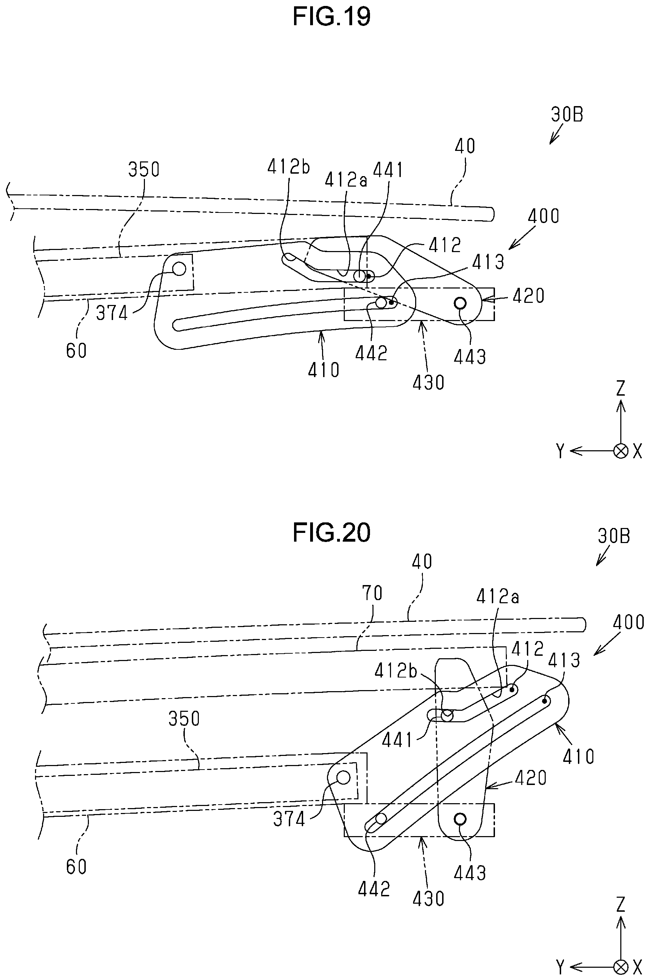

As shown in FIG. 19, the rear support part 400 of the sunroof apparatus 30B includes a first rear link 410, a second rear link 420, a link support portion 430, a second slide shaft 441, a third slide shaft 442, and a second link support shaft 443. Both the first rear link 410 and the second rear link 420 are configurations that rotate about respective axes extending in the width direction. In this respect, in each of the first rear link 410 and the second rear link 420, an end portion close to the rotation center is referred to as a proximal end portion, and an end portion opposite to the proximal end portion is referred to as a distal end portion.

The first rear link 410 has a flat plate shape. The plate thickness direction of the first rear link 410 coincides with the width direction. The first rear link 410 has a second slide groove 412 and a third slide groove 413 penetrating the first rear link 410 in the plate thickness direction. The second slide groove 412 is closer to the distal end portion than the proximal end portion of the first rear link 410. The second slide groove 412 includes a first portion 412a and a second portion 412b. In the state shown in FIG. 19, the first portion 412a extends in the front-rear direction, and the second portion 412b extends toward the front side from a front end of the first portion 412a. Specifically, the second portion 412b is inclined upward toward the front side. The third slide groove 413 is located on a lower side of the second slide groove 412. The third slide groove 413 is slightly inclined downward toward the front side. A distance between the first portion 412a of the second slide groove 412 and the third slide groove 413 is substantially constant. On the other hand, a distance between the second portion 412b of the second slide groove 412 and the third slide groove 413 increases toward the proximal end portion of the first rear link 410. The second rear link 420 is a configuration equivalent to the second rear link 320 according to the second embodiment.

The second slide shaft 441 has a cylindrical shape. The second slide shaft 441 extends in the width direction from a central portion in the longer direction of the second rear link 420. A distal end portion of the second slide shaft 441 is placed in the second slide groove 412 of the first rear link 410. In this respect, the second slide shaft 441 is slidable on an inner surface of the second slide groove 412 of the first rear link 410. The third slide shaft 442 and the second link support shaft 443 each have a cylindrical shape.

The third slide shaft 442 and the second link support shaft 443 are supported by the link support portion 430. The third slide shaft 442 and the second link support shaft 443 extend in the width direction. The third slide shaft 442 is located frontward relative to the second link support shaft 443. A distal end portion of the third slide shaft 442 is placed in the third slide groove 413 of the first rear link 410. Thus, the third slide shaft 442 is slidable on an inner surface of the third slide groove 413 of the first rear link 410. The second link support shaft 443 is a rotation shaft of the second rear link 420. The second link support shaft 443 is passed through the proximal end portion of the second rear link 420 in the width direction. Thus, the second rear link 420 is not movable in the front-rear direction, and is rotatable about an axis of the second link support shaft 443.

The transmission shaft 374 of the power transmission member 350 has a cylindrical shape. The transmission shaft 374 extends inward in the width direction from a rear end portion of the power transmission member 350. The transmission shaft 374 is a configuration that transmits power of the power transmission member 350 to the first rear link 410, and is a rotation shaft of the first rear link 410.

The rear support part 400 is fixed to the rear end portion of the guide rail 60. At this time, the first rear link 410 and the second rear link 420 are arranged between the inner wall 62 and the outer wall 63 of the guide rail 60. The bottom wall 61 of the guide rail 60 is preferably provided with a through hole in order to avoid interference with the first rear link 410 and the second rear link 420. The transmission shaft 374 of the power transmission member 350 is passed through a front end portion of the first rear link 410 in the width direction. Thus, the first rear link 410 is rotatable about an axis of the transmission shaft 374 with respect to the power transmission member 350. In addition, although not shown in FIG. 17, the distal end portion of the second rear link 420 supports the fixation bracket 70, similarly to the second rear link 320 according to the second embodiment.

In the state shown in FIG. 19, the second rear link 420 is located rearward relative to the axis of the transmission shaft 374, which is the rotation center of the first rear link 410. In this respect, the second link support shaft 443 is located rearward relative to the transmission shaft 374. In addition, the second link support shaft 443, which is the rotation center of the second rear link 420, is located rearward relative to the distal end portion of the first rear link 410.

### <Operation of Third Embodiment>

Operation of the sunroof apparatus 30B at the time when the movable panel 40 is caused to tilt up will be described with reference to FIGS. 19 and 20.

In a case where the drive shoe 80 is located at the full-closing corresponding position, the power transmission member 350 is located at the frontmost position in a movement range in the front-rear direction, as shown in FIG. 19. That is, the first rear link 410 connected to the transmission shaft 374 of the power transmission member 350 is located at the frontmost position in a movement range in the front-rear direction. The third slide shaft 442 is located in the vicinity of a rear end of the third slide groove 413 of the first rear link 410. Further, the first rear link 410 is tilted down to be along the guide rail 60. That is, the first rear link 410 is located at the first tilted-down position. On the other hand, the second rear link 420 connected to the first rear link 410 through the second slide shaft 441 is tilted down to be along the guide rail 60, similarly to the first rear link 410. That is, the second rear link 420 is located at the second tilted-down position.

As described above, in the case where the drive shoe 80 is located at the full-closing corresponding position, the first rear link 410 is located at the first tilted-down position, and the second rear link 420 is located at the second tilted-down position. That is, since the distal end portion of the second rear link 420 is lowered, the rear end portion of the fixation bracket 70 is lowered. As a result, the movable panel 40 is arranged at the fully-closing position. In the third embodiment, in a case where the first rear link 410 is located at the first tilted-down position, the distal end portion of the first rear link 410 is located rearward relative to the proximal end portion of the first rear link 410. On the other hand, in a case where the second rear link 420 is located at the second tilted-down position, the distal end portion of the second rear link 420 is located frontward relative to the proximal end portion of the second rear link 420.

In a case where the movable panel 40 is caused to tilt up from the fully-closing position, the actuator 50 causes the drive shoe 80 to move from the full-closing corresponding position to the tilt-up corresponding position. In this case, as shown in FIGS. 19 and 20, the power transmission member 350 moves rearward together with the drive shoe 80. That is, the first rear link 410 moves rearward together with the transmission shaft 374 of the power transmission member 350. Then, the second slide groove 412 of the first rear link 410 and the second slide shaft 441 of the second rear link 420 slide, and the third slide groove 413 of the first rear link 410 and the third slide shaft 442 of the link support portion 430 slide. At this time, the second slide shaft 441 slides on the first portion 412a of the second slide groove 412, and then slides on the second portion 412b of the second slide groove 412.

In the state shown in FIG. 19, the first portion 412a of the second slide groove 412 and the third slide groove 413 extend in substantially the same direction as the movement direction of the transmission shaft 374 of the power transmission member 350. Thus, in a case where the second slide shaft 441 slides on the first portion 412a of the second slide groove 412 and the third slide shaft 442 slides on the third slide groove 413, the posture of the first rear link 410 is substantially unchanged. Therefore, the posture of the second rear link 420 connected to the first rear link 410 through the second slide shaft 441 is also substantially unchanged.

In the state shown in FIG. 19, the second portion 412b of the second slide groove 412 extends in a direction intersecting with the movement direction of the transmission shaft 374 of the power transmission member 350. Thus, in a case where the second slide shaft 441 slides on the second portion 412b of the second slide groove 412 and the third slide shaft 442 slides on the third slide groove 413, the posture of the first rear link 410 is greatly changed. That is, the first rear link 410 is displaced based on power transmitted from the power transmission member 350 via the transmission shaft 374 and a force transmitted from the link support portion 430 via the sliding of the third slide shaft 442 and the third slide groove 413. In addition, the posture of the second rear link 420 connected to the first rear link 410 through the second slide shaft 441 is also greatly changed. That is, the second rear link 420 is displaced based on power transmitted from the first rear link 410 via the sliding of the second slide shaft 441 and the second slide groove 412.

Here, since the second slide shaft 441 extends in the width direction from the second rear link 420, the direction in which the second slide shaft 441 can move is restricted to a direction along an arc centered on the axis of the second link support shaft 443. Thus, in a case where the second slide shaft 441 slides on the second portion 412b of the second slide groove 412 of the first rear link 410, both the posture of the first rear link 410 and the posture of the second rear link 420 are changed. Specifically, the first rear link 410 rotates about the axis of the transmission shaft 374 of the power transmission member 350 while moving rearward. That is, the first rear link 410 rises with respect to the guide rail 60 while moving rearward. In addition, the second rear link 420 rotates about the axis of the second link support shaft 443. That is, the second rear link 420 rises with respect to the guide rail 60. Thus, the rear end portion of the fixation bracket 70 is lifted up. As a result, the rear end portion of the movable panel 40 is lifted up.

As shown in FIG. 20, when the drive shoe 80 moves to the tilt-up corresponding position, the power transmission member 350 moves to the rearmost position in the movement range in the front-rear direction. That is, the first rear link 410 moves to the rearmost position in the movement range in the front-rear direction. As a result, the second slide shaft 441 moves to the vicinity of a front end of the second portion 412b of the second slide groove 412, and the third slide shaft 442 relatively moves to the vicinity of a front end of the third slide groove 413. As a result, the first rear link 410 assumes the maximally rising posture with respect to the guide rail 60. That is, the first rear link 410 is arranged at the first rising position. Likewise, the second rear link 420 assumes the maximally rising posture with respect to the guide rail 60. That is, the second rear link 420 is arranged at the second rising position.

As described above, in a case where the drive shoe 80 is located at the tilt-up corresponding position, the first rear link 410 is located at the first rising position, and the second rear link 420 is located at the second rising position. That is, since the distal end portion of the second rear link 420 is lifted up, the rear end portion of the fixation bracket 70 is lifted up. As a result, the movable panel 40 is arranged at the tilt-up position.

Operation of the sunroof apparatus 30B at the time when the movable panel 40 is caused to tilt down will be briefly described.

In a case where the movable panel 40 is caused to tilt down from the tilt-up position, the actuator 50 causes the drive shoe 80 to move from the tilt-up corresponding position to the full-closing corresponding position. In this case, the power transmission member 350 moves frontward together with the drive shoe 80. That is, the first rear link 410 moves frontward together with the transmission shaft 374 of the power transmission member 350. Then, the second slide shaft 441 of the second rear link 420 slides on the second slide groove 412 of the second rear link 420, and the third slide shaft 442 of the link support portion 430 slides on the third slide groove 413 of the first rear link 410. As a result, the first rear link 410 rotates to tilt down about the axis of the transmission shaft 374 while moving frontward. In addition, the second rear link 420 rotates to tilt down about the axis of the second link support shaft 443. Thus, the first rear link 410 is displaced from the first rising position to the first tilted-down position, and the second rear link 420 is displaced from the second rising position to the second tilted-down position. As a result, the movable panel 40 is arranged at the fully-closing position.

### <Effects of Third Embodiment>

The third embodiment can obtain the following effects in addition to the effects equivalent to effects (1-1), (1-2), and (2-1) of the above embodiments.

(3-1) In a case where the movable panel 40 is caused to move from the tilt-up position to the fully-opening position, the front support part 90 is caused to move rearward by the drive shoe 80. In a state where the movable panel 40 is arranged at the fully-opening position, the front support part 90 comes closest to the second rear link 420. In other words, in the case where the movable panel 40 is caused to move from the tilt-up position to the fully-opening position, the roof opening 25 can be opened further largely by increasing an amount of rearward movement of the front support part 90.

In this respect, in the third embodiment, the second rear link 420 is located rearward relative to the transmission shaft 374, which is the rotation center of the first rear link 410. That is, the second link support shaft 443, which is the rotation shaft of the second rear link 420, is also located rearward relative to the transmission shaft 374, which is the rotation center of the first rear link 410. In this respect, the second rear link 420 is located in the vicinity of a rear end of the sunroof apparatus 30B. Thus, in the sunroof apparatus 30B, since the second rear link 420 can be arranged in the vicinity of the rear end of the sunroof apparatus 30B, it is possible to increase the amount of rearward movement of the front support part 90 when the movable panel 40 is caused to perform the opening operation toward the fully-opening position. Therefore, the sunroof apparatus 30B can largely open the roof opening 25 when the movable panel 40 is arranged at the fully-opening position.

In addition, when the movable panel 40 is arranged at the fully-opening position, the distance in the front-rear direction between the front support part 90 and the second rear link 420 becomes long. Thus, it is possible to bring a position, in the movable panel 40, supported by the second rear link 420 close to the rear end of the movable panel 40. As a result, the posture of the movable panel 40 arranged at the fully-opening position is stabilized.

(3-2) The first rear link 410 has the second slide groove 412 and the third slide groove 413, but each of the other components of the rear support part 400 does not have a slide groove. That is, in the sunroof apparatus 30B, since the two slide grooves can be collected in the first rear link 410, the other components of the rear support part 400 can be simplified.

### <Fourth Embodiment>

A sunroof apparatus 30C according to a fourth embodiment will be described. As compared with the first embodiment, the fourth embodiment is different from the first embodiment mainly in a configuration of a rear support part 500. Thus, configurations different from those of the first embodiment will be described in detail. For configurations common to those of the first embodiment, the same reference signs or the same names will be given, and description thereof will be omitted.

### <Configuration of Fourth Embodiment>

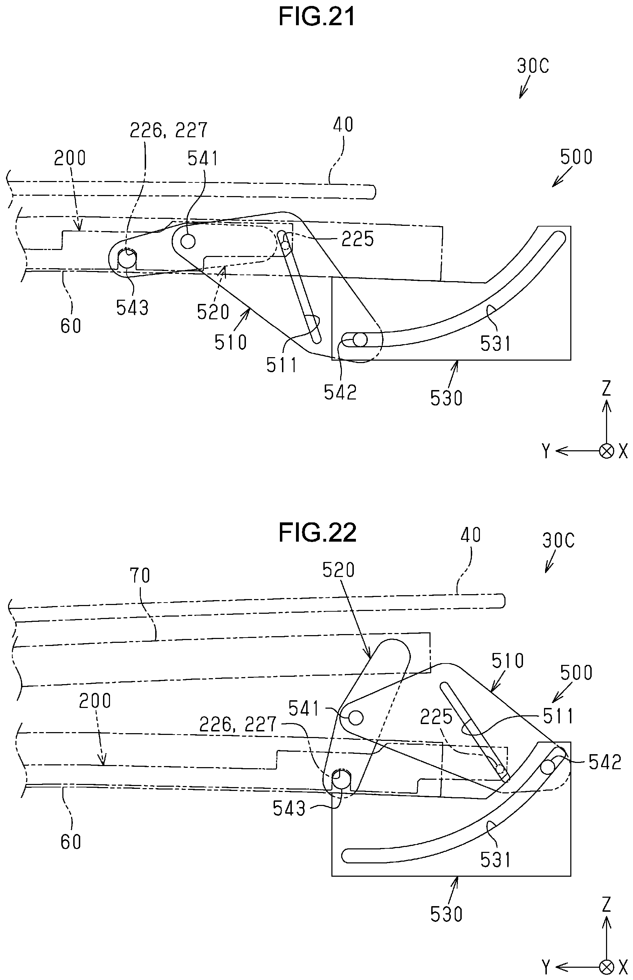

As shown in FIG. 21, the rear support part 500 of the sunroof apparatus 30C includes a first rear link 510, a second rear link 520, a link support portion 530, a connection shaft 541, a first link support shaft 542, and a second link support shaft 543.

The first rear link 510 has a rectangular plate shape. The plate thickness direction of the first rear link 510 coincides with the width direction. The first rear link 510 has a first slide groove 511 penetrating the first rear link 510 in the width direction. The first slide groove 511 extends linearly as viewed in the width direction. In the state shown in FIG. 21, the first slide groove 511 extends downward toward the rear side. That is, the first slide groove 511 is inclined with respect to both the front-rear direction and the up-down direction.

In the following description, in the state shown in FIG. 21, a portion to be formed as a lower end portion of the first rear link 510 is referred to as a proximal end portion, and a portion to be formed as a front end portion of the first rear link 510 is referred to as a distal end portion. The second rear link 520 is a configuration substantially equivalent to the second rear link 320 according to the second embodiment. In this respect, in the second rear link 520, an end portion close to the rotation center is referred to as a proximal end portion, and an end portion opposite to the proximal end portion is referred to as a distal end portion.

The link support portion 530 has a flat plate shape. The plate thickness direction of the link support portion 530 coincides with the width direction. The link support portion 530 has a third slide groove 531 penetrating the link support portion 530 in the width direction. The third slide groove 531 extends in an arc shape as viewed in the width direction. Specifically, the third slide groove 531 is curved upward toward the rear side.

The connection shaft 541 has a cylindrical shape. The axial direction of the connection shaft 541 coincides with the width direction. The connection shaft 541 connects the distal end portion of the first rear link 510 and a central portion in the longer direction of the second rear link 520 to each other. Thus, the first rear link 510 and the second rear link 520 are rotatable relative to each other about an axis of the connection shaft 541.

The first link support shaft 542 has a cylindrical shape. The first link support shaft 542 extends in the width direction from the proximal end portion of the first rear link 510. The first link support shaft 542 is a rotation shaft of the first rear link 510. The first link support shaft 542 is supported by the link support portion 530. Specifically, a distal end portion of the first link support shaft 542 is placed in the third slide groove 531 of the link support portion 530. Thus, the first rear link 510 is rotatable relative to the link support portion 530 about an axis of the first link support shaft 542. Further, the first rear link 510 is movable in an extending direction of the third slide groove 531 with respect to the link support portion 530, together with the first link support shaft 542. Note that in a case where the first rear link 510 rotates, or moves along the third slide groove 531, the first link support shaft 542 slides on an inner surface of the third slide groove 531.

The second link support shaft 543 has a cylindrical shape. The second link support shaft 543 extends inward and outward in the width direction from the proximal end portion of the second rear link 520. The second link support shaft 543 is a rotation shaft of the second rear link 520.

Engagement relationships between the guide rail 60, the rear support part 500, and the power transmission member 200 will be described.

The link support portion 530 of the rear support part 500 is fixed to the rear end portion of the guide rail 60. At this time, the first rear link 510 and the second rear link 520 are arranged between the inner wall 62 and the outer wall 63 of the guide rail 60. The bottom wall 61 of the guide rail 60 is preferably provided with a through hole in order to avoid interference with the first rear link 510 and the second rear link 520. In addition, although not shown in FIG. 21, the distal end portion of the second rear link 520 supports the fixation bracket 70, similarly to the second rear link 320 according to the second embodiment.

The power transmission member 200 is accommodated in the guide rail 60, as in the first embodiment. A distal end portion of the first slide shaft 225 of the power transmission member 200 is placed in the first slide groove 511 of the first rear link 510. Thus, in a case where the power transmission member 200 moves in the front-rear direction, the first slide shaft 225 slides on an inner surface of the first slide groove 511 of the first rear link 510. The second link support shaft 543 of the second rear link 520 is sandwiched in the up-down direction between the power transmission member 200 and the bottom wall 61 of the guide rail 60. At this time, both end portions of the second link support shaft 543 are respectively placed in the first recess portion 226 and the second recess portion 227 of the power transmission member 200. Thus, the second rear link 520 is movable in the front-rear direction together with the power transmission member 200. In addition, the second rear link 520 is rotatable relative to the power transmission member 200 about an axis of the second link support shaft 543. In the state shown in FIG. 21, the second link support shaft 543 is located frontward relative to the connection shaft 541 and the first slide shaft 225. In addition, the connection shaft 541 is located frontward relative to the first slide shaft 225.

### <Operation of Fourth Embodiment>

Operation of the sunroof apparatus 30C at the time when the movable panel 40 is caused to tilt up will be described with reference to FIGS. 21 and 22.

In a case where the drive shoe 80 is located at the full-closing corresponding position, the power transmission member 200 is located at the frontmost position in a movement range in the front-rear direction, as shown in FIG. 21. In addition, the first slide shaft 225 of the power transmission member 200 is located in the vicinity of an upper end of the first slide groove 511 of the first rear link 510. On the other hand, the first link support shaft 542 of the first rear link 510 is located in the vicinity of a front end of the third slide groove 531 of the link support portion 530. Further, the distal end portion of the first rear link 510 is lowered. In the following description, the position of the first rear link 510 shown in FIG. 21 is referred to as a "first lowered position". On the other hand, the second rear link 520 is located at the frontmost position in a movement range in the front-rear direction. In addition, since the connection shaft 541 is lowered, the second rear link 520 is tilted down to be along the guide rail 60. That is, the second rear link 520 is located at the second tilted-down position.

As described above, in the case where the drive shoe 80 is located at the full-closing corresponding position, the first rear link 510 is located at the first lowered position, and the second rear link 520 is located at the second tilted-down position. That is, since the distal end portion of the second rear link 520 is lowered, the rear end portion of the fixation bracket 70 is lowered. As a result, the movable panel 40 is arranged at the fully-closing position. In the fourth embodiment, in a case where the first rear link 510 is located at the first lowered position, the distal end portion of the first rear link 510 is located frontward relative to the proximal end portion of the first rear link 510. On the other hand, in a case where the second rear link 520 is located at the second tilted-down position, the distal end portion of the second rear link 520 is located rearward relative to the proximal end portion of the second rear link 520.

In a case where the movable panel 40 is caused to tilt up from the fully-closing position, the actuator 50 causes the drive shoe 80 to move from the full-closing corresponding position to the tilt-up corresponding position. In this case, the power transmission member 200 moves rearward together with the drive shoe 80. Then, as shown in FIGS. 21 and 22, a portion in the first rear link 510 in contact with the first slide shaft 225 of the power transmission member 200 moves rearward together with the power transmission member 200. On the other hand, the second link support shaft 543 of the second rear link 520 moves rearward together with the power transmission member 200.

The first rear link 510 is movable relative to the first slide shaft 225 of the power transmission member 200, and is movable with respect to the third slide groove 531 of the link support portion 530. On the other hand, the second rear link 520 is rotatable about the axis of the second link support shaft 543 with respect to the power transmission member 200. However, the first rear link 510 and the second rear link 520 are connected to each other through the connection shaft 541. Thus, a portion, in the first rear link 510, to which the connection shaft 541 is connected and a portion, in the second rear link 520, to which the connection shaft 541 is connected are displaced in a similar manner. Therefore, the front-rear position and the rotation angle of the first rear link 510 and the front-rear position and the rotation angle of the second rear link 520 are uniquely determined by the position of the first slide shaft 225 of the power transmission member 200.

Therefore, the first rear link 510 rotates, while moving rearward together with the first link support shaft 542, in accordance with the rearward movement of the power transmission member 200. At this time, the engagement relationship between the first slide groove 511 of the first rear link 510 and the first slide shaft 225 of the power transmission member 200 changes. Specifically, the first slide shaft 225 of the power transmission member 200 relatively moves toward a lower end of the first slide groove 511 of the first rear link 510. In addition, the first link support shaft 542 of the first rear link 510 moves toward a rear end of the third slide groove 531 of the link support portion 530. On the other hand, the second rear link 520 rotates, while moving rearward together with the second link support shaft 543, in accordance with the rearward movement of the power transmission member 200. Specifically, the second rear link 520 rises with respect to the guide rail 60 while moving rearward. Thus, the rear end portion of the fixation bracket 70 is lifted up. As a result, the rear end portion of the movable panel 40 is lifted up.

As shown in FIG. 22, when the drive shoe 80 moves to the tilt-up corresponding position, the power transmission member 200 moves to the rearmost position in the movement range in the front-rear direction. Then, the first slide shaft 225 of the power transmission member 200 relatively moves to the vicinity of the lower end of the first slide groove 511 of the first rear link 510. In other words, the first slide shaft 225 of the power transmission member 200 relatively moves to an end portion, in the first slide groove 511 of the first rear link 510, close to the first link support shaft 542. In addition, the first link support shaft 542 of the first rear link 510 moves to the vicinity of the rear end of the third slide groove 531 of the link support portion 530. Further, the distal end portion of the first rear link 510 is lifted up to the highest position. In the following description, the position of the first rear link 510 shown in FIG. 22 is referred to as a "first lifted position". On the other hand, the second rear link 520 moves to the rearmost position in the movement range in the front-rear direction. In addition, the second rear link 520 assumes the maximally rising posture with respect to the guide rail 60. That is, the second rear link 520 is arranged at the second rising position.

As described above, in a case where the drive shoe 80 is located at the tilt-up corresponding position, the first rear link 510 is located at the first lifted position, and the second rear link 520 is located at the second rising position. That is, since the distal end portion of the second rear link 520 is lifted up, the rear end portion of the fixation bracket 70 is lifted up. As a result, the movable panel 40 is arranged at the tilt-up position.

Operation of the sunroof apparatus 30C at the time when the movable panel 40 is caused to tilt down will be briefly described.

In a case where the movable panel 40 is caused to tilt down from the tilt-up position, the actuator 50 causes the drive shoe 80 to move from the tilt-up corresponding position to the full-closing corresponding position. In this case, the power transmission member 200 moves frontward together with the drive shoe 80. Then, the first rear link 510 and the second rear link 520 move frontward together with the power transmission member 200. At this time, the first slide shaft 225 of the power transmission member 200 slides on the first slide groove 511 of the first rear link 510, and the first link support shaft 542 of the first rear link 510 slides on the third slide groove 531 of the link support portion 530. In addition, the connection shaft 541 connecting the first rear link 510 and the second rear link 520 is lowered. As a result, the first rear link 510 rotates, while moving frontward. On the other hand, the second rear link 520 rotates about the axis of the second link support shaft 543 while moving frontward. Thus, the first rear link 510 is displaced from the first lifted position to the first lowered position, and the second rear link 520 is displaced from the second rising position to the second tilted-down position. As a result, the movable panel 40 is arranged at the fully-closing position.

### <Effects of Fourth Embodiment>

The fourth embodiment can obtain the following effects in addition to the effects equivalent to effects (1-1), (1-2), and (1-17) of the first embodiment.

(4-1) The first rear link 510 is displaced between the first lowered position and the first lifted position by rotating about an axis extending in the width direction while moving in the front-rear direction. Likewise, the second rear link 520 is displaced between the second tilted-down position and the second rising position by rotating about an axis extending in the width direction while moving in the front-rear direction. Thus, a degree of freedom is increased for setting the operation trajectories of the first rear link 510 and the second rear link 520 to be formed when the power transmission member 200 moves in the front-rear direction, as compared with a case in which the degrees of freedom of the first rear link 510 and the second rear link 520 are only degrees of freedom in rotation.

### <Modifications>

Each of the plurality of embodiments described above can be modified and implemented as follows. The plurality of embodiments and the following modifications can be implemented in combination with each other within a range in which technical inconsistency does not occur.
- In the first embodiment, the direction in which the first slide groove 131 of the first rear link 110 extends can be changed as appropriate. Likewise, the direction in which the second slide groove 134 of the first rear link 110 extends can be changed as appropriate. As an example, the first slide groove 131 and the second slide groove 134 may extend linearly or may extend while being curved. Depending on the direction in which the first slide groove 131 extends and the direction in which the second slide groove 134 extends, the power transmission member 200 can displace the second rear link 140 without displacing the first rear link 110, when the drive shoe 80 moves rearward from the full-closing corresponding position. In addition, the power transmission member 200 can displace the first rear link 110 without displacing the second rear link 140.
- In the first embodiment, the first rear link 110 may be a metal plate that is not covered with a resin material. In this case, the first slide groove 131 and the second slide groove 134 preferably penetrate the first rear link 110 in the plate thickness direction.
- In the first embodiment, the first rear link 110 may have a configuration corresponding to the first slide shaft 225. In this case, the power transmission member 200 preferably has a configuration corresponding to the first slide groove 131.
- In the second embodiment, the first rear link 310 may have a configuration corresponding to the first slide shaft 373. In this case, the power transmission member 350 preferably has a configuration corresponding to the first slide groove 311.
- In the first embodiment, the first rear link 110 may have a configuration corresponding to the second slide shaft 147. In this case, the second rear link 140 preferably has a configuration corresponding to the second slide groove 134.
- In the third embodiment, the first rear link 410 may have a configuration corresponding to the third slide shaft 442. In this case, the link support portion 430 preferably has a configuration corresponding to the third slide groove 413.
- In the first embodiment, when the first rear link 110 is located at the first tilted-down position, the distal end portion thereof may be located rearward relative to the proximal end portion thereof. Likewise, when the second rear link 140 is located at the second tilted-down position, the distal end portion thereof may be located frontward relative to the proximal end portion thereof.
- In the first embodiment, the first rear link 110 may have the first slide groove 131 and the second slide groove 134 on one side in the width direction. In this case, the holding wall 223 of the power transmission member 200 and the second rear link 140 are preferably arranged on the one side, in the width direction, of the first rear link 110.
- In the first embodiment, the second slide groove 134 of the first rear link 110 need not have the upright groove 134b.
- In the first embodiment, the upright groove 134b of the first rear link 110 need not penetrate the second rib 122.
- In the second embodiment, the rising angle of the second rear link 320 located at the second rising position may be smaller than the rising angle of the first rear link 310 located at the first rising position.
- In the second embodiment, the entire length of the first rear link 310 may be equal to or shorter than the entire length of the second rear link 320. In this case, a rotation angle of the first rear link 310 from the first tilted-down position to the first rising position may be larger than a rotation angle of the second rear link 320 from the second tilted-down position to the second rising position.
- In the first embodiment, the engagement protrusion portion 148 of the second rear link 140 may have a hemispherical shape. In this case, the engagement recess portion 125 of the first rear link 110 is preferably recessed hemispherically.
- In the first embodiment, the first rear link 110 may have a configuration corresponding to the engagement protrusion portion 148. In this case, the second rear link 140 preferably has a configuration corresponding to the engagement recess portion 125.
- In the first embodiment, the first rear link 110 need not include the engagement recess portion 125, and the second rear link 140 need not include the engagement protrusion portion 148.
- In the first embodiment, in a case where the first rear link 110 is arranged at the first tilted-down position, the distal end portion of the first rear link 110 may protrude upward with respect to the upper edge of the guide rail 60. Likewise, in a case where the second rear link 140 is arranged at the second tilted-down position, the distal end portion of the second rear link 140 may protrude upward with respect to the upper edge of the guide rail 60. However, amounts of these protrusions are preferably small.
- In the first embodiment, the link support portion 150 may protrude upward with respect to the upper edge of the guide rail 60. In this case, the rotation axis of the second rear link 140 may be located above the upper edge of the guide rail 60. In addition, the link support portion 150 may protrude downward with respect to the lower edge of the guide rail 60. In this case, the rotation axis of the second rear link 140 may be located below the lower edge of the guide rail 60. The same applies to other embodiments.
- In the first embodiment, the second rear link 140 is movable in the front-rear direction. However, in a modification, the movement direction of the second rear link 140 need not be the front-rear direction. For example, the movement direction of the second rear link 140 may be the up-down direction, the width direction, or another direction. Likewise, in the second embodiment, the first rear link 310 is movable in the front-rear direction. However, in a modification, the movement direction of the first rear link 310 need not be the front-rear direction. For example, the movement direction of the first rear link 310 may be the up-down direction, the width direction, or another direction.
- In the first embodiment, while the first rear link 110 and the second rear link 140 may be rotatable about respective axes extending in the width direction, the first rear link 110 and the second rear link 140 may be immovable in any direction such as the front-rear direction. In this case, the first rear link is preferably configured to be rotatable by sliding with the slide shaft of the power transmission member, and the second rear link is preferably configured to be rotatable in accordance with the rotation of the first rear link.
- In the first embodiment, the sunroof apparatus 30 may simply allow the movable panel 40 to operate between the fully-closing position and the tilt-up position. That is, the sunroof apparatus 30 need not include a configuration for arranging the movable panel 40 at the fully-opening position. The same applies to other embodiments.

### Summary of Present Embodiment

The present embodiment includes at least the following configurations.

A sunroof apparatus (30; 30A; 30B; 30C) according to the present embodiment includes: a movable panel (40) configured to be displaced between a fully-closing position at which the movable panel (40) fully closes a roof opening (25) of a vehicle (10) and a tilt-up position at which a rear end portion of the movable panel (40) is lifted higher than the fully-closing position; a guide rail (60) extending in a front-rear direction of the vehicle (10); a rear support part (100; 300; 400; 500) disposed at a position closer to a rear end than a front end of the guide rail (60), the rear support part (100; 300; 400; 500) supporting the movable panel (40); and a power transmission member (200; 350) configured to move in the front-rear direction along the guide rail (60), in which the rear support part (100; 300; 400; 500) includes: a first rear link (110; 310; 410; 510) configured to rotate about an axis extending in a width direction of the vehicle (10); and a second rear link (140; 320; 420; 520) configured to rotate about an axis extending in the width direction in a state of supporting the movable panel (40), the first rear link (110; 310; 410; 510) is configured to rotate based on power transmitted from the power transmission member (200; 350), and the second rear link (140; 320; 420; 520) is configured to displace the movable panel (40) by rotating in accordance with rotation of the first rear link (110; 310; 410; 510).

In the sunroof apparatus, the power transmission member causes the first rear link to rotate. In addition, the first rear link causes the second rear link to rotate. Thus, the sunroof apparatus can allow the rotation amount of the second rear link to increase without increasing the load of the power transmission member, as compared with a comparative example in which the power transmission member directly causes the second rear link to rotate. Accordingly, even in a case where the second rear link is tilted down to be along the guide rail in a state where the movable panel is caused to be arranged at the fully-closing position, the sunroof apparatus can cause the second rear link to rise from the guide rail when the sunroof apparatus attempts to cause the movable panel to be arranged at the tilt-up position. Therefore, in the sunroof apparatus, it is possible to reduce a thickness of the apparatus in the up-down direction formed when the movable panel is caused to be arranged at the fully-closing position.

When the power transmission member (200; 350) moves in the front-rear direction, at least one of the first rear link (110; 310; 410; 510) or the second rear link (140; 320; 420; 520) is preferably configured to rotate, while moving in a movement direction of the power transmission member (200; 350).

In a case where degrees of freedom of the first rear link and the second rear link are only degrees of freedom in rotation, the operation amount of the second rear link tends to be relatively small. In contrast, in the sunroof apparatus of the present embodiment, at least one of the first rear link or the second rear link has a degree of freedom allowing movement in the front-rear direction. Thus, in the sunroof apparatus of the present embodiment, it is possible to relatively increase the operation amount of the second rear link. As a result, in the sunroof apparatus of the present embodiment, it is possible to easily secure the lifted amount of the rear end portion of the movable panel, when the movable panel is arranged at the tilt-up position.

Preferably, the rear support part (100) includes: a first link support shaft (123) that is a rotation shaft of the first rear link (110), the first link support shaft (123) having an axis whose extending direction is the width direction; and a second link support shaft (144; 145) that is a rotation shaft of the second rear link (140), the second link support shaft (144; 145) having an axis whose extending direction is the width direction, the second link support shaft (144; 145) being arranged frontward relative to the first link support shaft (123), and when the power transmission member (200) moves in the front-rear direction: the first rear link (110) is configured to rotate while the first link support shaft (123) is configured not to move in a movement direction of the power transmission member (200); and the second rear link (140) is configured to rotate while the second link support shaft (144; 145) is configured to move in a movement direction of the power transmission member (200).

In the sunroof apparatus, when the power transmission member moves in the front-rear direction, forces are transmitted to the second rear link from both the power transmission member and the first rear link. That is, two forces act on the second rear link. Thus, at the time of designing the sunroof apparatus, by adjusting a position at which the power transmission member causes the force to act on the second rear link and a position at which the first rear link causes the force to act on the second rear link, it is possible to cause the second rear link to easily rotate.

Preferably, a position of the second rear link (140) at which the movable panel (40) is arranged at the fully-closing position is a second tilted-down position and a position of the second rear link (140) at which the movable panel (40) is arranged at the tilt-up position is a second rising position, a position of the first rear link (110) at which the second rear link (140) is arranged at the second tilted-down position is a first tilted-down position and a position of the first rear link (110) at which the second rear link (140) is arranged at the second rising position is a first rising position, one of the first rear link (110) and the second rear link (140) includes a slide shaft (147) extending in the width direction and another one of the first rear link (110) and the second rear link (140) has a slide groove (134) on which the slide shaft (147) slides, the first rear link (110) is configured to be displaced between the first tilted-down position and the first rising position based on power transmitted from the power transmission member (200), and the second rear link (140) is configured to be displaced between the second tilted-down position and the second rising position based on power transmitted from the power transmission member (200) and power transmitted from the first rear link (110) via sliding of the slide shaft (147) and the slide groove (134).

In the sunroof apparatus, in a case where the movable panel is displaced from the fully-closing position to the tilt-up position, the power transmission member is driven. The first rear link is displaced from the first tilted-down position to the first rising position, and the second rear link is displaced from the second tilted-down position to the second rising position, based on the power transmitted from the power transmission member. That is, the first rear link and the second rear link rise with respect to the guide rail. As a result, a portion of the movable panel supported by the second rear link is lifted up, whereby the movable panel is displaced to the tilt-up position. Here, the rising amount of the second rear link, that is, the tilt-up amount of the movable panel is related to the engagement relationship between the slide shaft and the slide groove in each of the first rear link and the second rear link.

In a case where the movable panel is arranged at the fully-closing position, the first rear link is located at the first tilted-down position at which the first rear link is tilted down with respect to the guide rail. In this case, an amount of upward protrusion of the first rear link with respect to the guide rail decreases. On the other hand, in a case where the movable panel is arranged at the fully-opening position, the first rear link is located at the first rising position at which the first rear link has risen with respect to the guide rail. In this case, the amount of upward protrusion of the first rear link with respect to the guide rail increases. That is, in the sunroof apparatus, since an engagement position between the first rear link and the second rear link through the slide shaft and the slide groove is easily arranged upward, it is possible to increase the rising amount of the second rear link, supporting the movable panel, at the second rising position. Thus, in the sunroof apparatus, it is possible to reduce a thickness of the apparatus in the up-down direction, while securing the tilt-up amount of the movable panel.

Preferably, the slide shaft (147) is a second slide shaft (147), and the slide groove (134) is a second slide groove (134), the power transmission member (200) includes a first slide shaft (225) extending in the width direction, the first rear link (110) has a first slide groove (131) on which the first slide shaft (225) slides, and the first rear link (110) is configured to be displaced between the first tilted-down position and the first rising position based on power transmitted from the power transmission member (200) via sliding of the first slide shaft (225) and the first slide groove (131).

In the sunroof apparatus, it is possible to cause a configuration that transmits power from the first rear link to the second rear link to be similar to a configuration that transmits power from the power transmission member to the first rear link.

In addition, since the power transmission member is a member that moves substantially in the front-rear direction, if the power transmission member is provided with a configuration corresponding to the first slide groove, the thickness of the power transmission member in the up-down direction tends to increase. In contrast, in the sunroof apparatus of the present embodiment, the power transmission member has the first slide shaft, and the first rear link has the first slide groove. Thus, in the sunroof apparatus of the present embodiment, it is possible to reduce an increase in thickness of the apparatus in the up-down direction.

Preferably, a portion, in the power transmission member (200), that transmits power to the first rear link (110) and a portion, in the first rear link (110), to which power is transmitted from the power transmission member (200) are adjacent to each other in the width direction, a portion, in the power transmission member (200), that transmits power to the second rear link (140) and a portion, in the second rear link (140), to which power is transmitted from the power transmission member (200) are adjacent to each other in the width direction, and a portion, in the first rear link (110), that transmits power to the second rear link (140) and a portion, in the second rear link (140), to which power is transmitted from the first rear link (110) are adjacent to each other in the width direction.

For example, in a case where the power transmission member and the first rear link are separated from each other in the width direction, efficiency in power transmission from the power transmission member to the first rear link is likely to decrease. In contrast, in the sunroof apparatus described above, the portions, related to power transmission, in the power transmission member and the first rear link are adjacent to each other in the width direction. Thus, in the sunroof apparatus, it is possible to prevent a decrease in efficiency in power transmission from the power transmission member to the first rear link. Likewise, in the sunroof apparatus, it is possible to prevent decreases in efficiency in power transmission from the power transmission member to the second rear link and efficiency in power transmission from the first rear link to the second rear link.

Arising angle of the second rear link (140) located at the second rising position with respect to the guide rail (60) is preferably close to perpendicular, as compared with a rising angle of the first rear link (110) located at the first rising position with respect to the guide rail (60).

In a case where a load in the up-down direction acts on the movable panel in a state where the movable panel is arranged at the tilt-up position, the load is transmitted to the second rear link supporting the movable panel. In the sunroof apparatus described above, in the state where the movable panel is arranged at the tilt-up position, the rising angle of the second rear link is an angle close to perpendicular, as compared with the rising angle of the first rear link. Thus, in a case where the load described above is transmitted to the second rear link, torque for causing the second rear link to rotate is less likely to be generated in the second rear link. As a result, in the sunroof apparatus, it is possible to reduce torque generated in the second rear link, when a load in the up-down direction acts on the movable panel arranged at the tilt-up position.

Preferably, an entire length of the first rear link (110) is longer than an entire length of the second rear link (140), and a rotation angle of the first rear link (110) from the first tilted-down position to the first rising position is smaller than a rotation angle of the second rear link (140) from the second tilted-down position to the second rising position.

The entire length of the first rear link is longer than the entire length of the second rear link. Thus, it is possible to keep the first slide groove of the first rear link away from the rotation center of the first rear link. As a result, when the movable panel is displaced from the fully-closing position to the tilt-up position, the distance between a portion at which the first slide shaft of the power transmission member pushes the first rear link and the rotation center of the first rear link is long. Therefore, in the sunroof apparatus, it is possible to increase efficiency in power transmission from the first slide shaft of the power transmission member to the first rear link.

In addition, the rotation angle of the first rear link from the first tilted-down position to the first rising position is smaller than the rotation angle of the second rear link from the second tilted-down position to the second rising position. Thus, even when the entire length of the first rear link is increased, the first rear link arranged at the first rising position hardly interferes with the movable panel arranged at the tilt-up position.

Preferably, the first rear link (110) includes: a base portion (111a) made of a metal material; and a covering portion (120) made of a resin material, the covering portion (120) covering the base portion (111a), the second rear link (140) includes the second slide shaft (147), and the covering portion (120) of the first rear link (110) includes: a first rib (121) extending in the width direction from the base portion (111a) to define the first slide groove (131); and a second rib (122) extending in a direction opposite to the first rib (121) from the base portion (111a) to define the second slide groove (134).

In the first rear link, the first slide groove and the second slide groove are provided in the covering portion made of a resin material. Thus, in the sunroof apparatus, it is possible to increase a degree of freedom in the shapes of the first slide groove and the second slide groove, as compared with a case in which the first slide groove and the second slide groove are provided in the base portion.

Preferably, the power transmission member (200) includes a holding wall (223) holding the first slide shaft (225), the first rear link (110) is arranged between the holding wall (223) of the power transmission member (200) and the second rear link (140) in the width direction, and in the first rear link (110), the first rib (121) extends toward the holding wall (223), and the second rib (122) extends toward the second rear link (140).

In the sunroof apparatus, it is possible to densely arrange a configuration that transmits power from the power transmission member to the first rear link and a configuration that transmits power from the first rear link to the second rear link, in the width direction. Thus, in the sunroof apparatus, it is possible to reduce an increase in size of the rear support part in the width direction.

Preferably, the first rear link (110) has a bar shape, an axis of the first link support shaft (123) passes through a proximal end portion of the first rear link (110) in the width direction, the second slide groove (134) has: a lateral groove (134a) extending from a distal end portion toward a proximal end portion of the first rear link (110); and an upright groove (134b) extending in an intersecting direction that is a direction intersecting with the lateral groove (134a), from an end portion, of both end portions of the lateral groove (134a), close to an axis of the first link support shaft (123), and in a state where the first rear link (110) is arranged at the first rising position and the second rear link (140) is arranged at the second rising position, the upright groove (134b) extends upward from an end portion of the lateral groove (134a) close to a rotation axis of the first rear link (110), and the second slide shaft (147) of the second rear link (140) is located in the upright groove (134b).

When the vehicle travels in a state where the movable panel is arranged at the tilt-up position, a load in the up-down direction may temporarily or periodically act on the movable panel. Such a load can be transmitted to the second rear link via the movable panel. In this respect, in the state where the movable panel is arranged at the tilt-up position, the second slide shaft of the second rear link is placed in the upright groove extending in the up-down direction. Thus, when the load described above acts, the second slide shaft of the second rear link attempts to move along the upright groove. That is, the load described above is less likely to be transmitted from the second rear link to the first rear link via the second slide shaft. Thus, the sunroof apparatus can restrict the movement of the movable panel from the tilt-up position, in a case where the load in the up-down direction acts on the movable panel arranged at the tilt-up position.

In the first rear link (110), the upright groove (134b) preferably penetrates the second rib (122) in the intersecting direction.

In the sunroof apparatus, when the length of the upright groove of the first rear link is increased, it is easy to increase the rising amount of the second rear link when the second rear link is arranged at the second rising position. In this respect, in the sunroof apparatus of the present embodiment, since the upright groove of the first rear link penetrates the second rib, it is possible to increase the length of the upright groove without increasing a thickness of the first rear link in a direction in which the upright groove extends.

Preferably, one of the first rear link (110) and the second rear link (140) has an engagement protrusion portion (148), the other one of the first rear link (110) and the second rear link (140) has an engagement recess portion (125), and in a case where the first rear link (110) is located at the first rising position and the second rear link (140) is located at the second rising position, the engagement protrusion portion (148) is fitted into the engagement recess portion (125).

In the sunroof apparatus, in a case where the first rear link is located at the first rising position and the second rear link is located at the second rising position, the first rear link and the second rear link are less likely to move relative to each other. Thus, the sunroof apparatus can restrict unexpected movement of the movable panel arranged at the tilt-up position caused due to the relative movement between the first rear link and the second rear link.

In a state where the movable panel (40) is arranged at the fully-closing position, the first rear link (110) is preferably located on a lower side of an upper edge of the guide rail (60).

In the sunroof apparatus, it is possible to reduce an increase in thickness of the apparatus in the up-down direction caused by the first rear link, in a case where the movable panel is arranged at the fully-closing position.

A rotation axis of the first rear link (110) is preferably located below an upper edge of the guide rail (60) and above a lower edge of the guide rail (60), as viewed in the width direction.

In a case where the rotation axis of the first rear link is located above the upper edge of the guide rail, the first rear link is likely to protrude upward with respect to the guide rail. On the other hand, in a case where the rotation axis of the first rear link is located below the lower edge of the guide rail, the first rear link is likely to protrude downward with respect to the guide rail. In these respects, in the sunroof apparatus of the present embodiment, the rotation axis of the first rear link is located below the upper edge of the guide rail and above the lower edge of the guide rail. Thus, in the sunroof apparatus of the present embodiment, it is possible to further reduce a thickness of the apparatus in the up-down direction formed when the movable panel is arranged at the fully-closing position.

Preferably, the rear support part (500) includes: a first link support shaft (542) that is a rotation shaft of the first rear link (510), the first link support shaft (542) having an axis whose extending direction is the width direction; and a second link support shaft (543) that is a rotation shaft of the second rear link (520), the second link support shaft (543) having an axis whose extending direction is the width direction, and when the power transmission member (200) moves in the front-rear direction: the first rear link (510) is configured to rotate while the first link support shaft (542) is configured to move in a movement direction of the power transmission member (200); and the second rear link (520) is configured to rotate while the second link support shaft (543) is configured to move in a movement direction of the power transmission member (200).

A degree of freedom is increased for setting the operation trajectories of the first rear link and the second rear link to be formed when the power transmission member moves in the front-rear direction, as compared with a case in which the degrees of freedom of the first rear link and the second rear link are only degrees of freedom in rotation.

Preferably, the power transmission member (200) has a recess portion (226; 227) recessed upward, and the second link support shaft (144; 145; 543) is sandwiched in an up-down direction between the recess portion (226; 227) of the power transmission member (200) and the guide rail (60).

The second link support shaft of the second rear link is sandwiched in the up-down direction between the recess portion of the power transmission member and the guide rail. Thus, the second rear link is movable in the front-rear direction along the guide rail, and is rotatable about an axis extending in the width direction. That is, in the sunroof apparatus, it is possible to simplify a supporting mode of the second rear link.

Preferably, the rear support part (300) includes: a first link support shaft (342) that is a rotation shaft of the first rear link (310), the first link support shaft (342) having an axis whose extending direction is the width direction; and a second link support shaft (343) that is a rotation shaft of the second rear link (320), the second link support shaft (343) having an axis whose extending direction is the width direction, and when the power transmission member (350) moves in the front-rear direction: the first rear link (310) is configured to rotate while the first link support shaft (342) is configured to move in a movement direction of the power transmission member (350); and the second rear link (320) is configured to rotate while the second link support shaft (343) is configured not to move in a movement direction of the power transmission member (350).

A comparative example is assumed in which the second rear link supporting the rear end portion of the movable panel is movable in the front-rear direction and is rotatable. In this case, depending on a rotation direction and a movement direction of the second rear link, there is a possibility that an amount of movement of the movable panel in the front-rear direction between the fully-closing position and the tilt-up position increases. In this respect, in the sunroof apparatus of the present embodiment, since the second rear link is not movable in the front-rear direction, the amount of movement of the movable panel in the front-rear direction between the fully-closing position and the tilt-up position is less likely to increase. Therefore, when the sunroof apparatus of the present embodiment causes the movable panel to operate between the fully-closing position and the tilt-up position, the sunroof apparatus can cause the rear end portion of the movable panel to be lifted up and lowered while reducing the amount of movement of the movable panel in the front-rear direction.

Preferably, a position of the second rear link (320) at which the movable panel (40) is arranged at the fully-closing position is a second tilted-down position and a position of the second rear link (320) at which the movable panel (40) is arranged at the tilt-up position is a second rising position, a position of the first rear link (310) at which the second rear link (320) is arranged at the second tilted-down position is a first tilted-down position and a position of the first rear link (310) at which the second rear link (320) is arranged at the second rising position is a first rising position, the power transmission member (350) includes a first slide shaft (373) extending in the width direction, the first rear link (310) has a first slide groove (311) on which the first slide shaft (373) slides, the first rear link (310) is configured to be displaced between the first tilted-down position and the first rising position based on power transmitted from the power transmission member (350) via sliding of the first slide shaft (373) and the first slide groove (311), and the second rear link (320) is configured to be displaced between the second tilted-down position and the second rising position based on power transmitted from the first rear link (310).

When the movable panel is displaced from the fully-closing position to the tilt-up position, the first rear link rotates from the first tilted-down position to the first rising position. The first rear link rotates because torque is generated in the first rear link by the first slide shaft of the power transmission member pushing the first rear link rearward. Here, the torque generated in the first rear link is a product of a rotation direction component of the first rear link in a force with which the first slide shaft pushes the first rear link and a distance between a portion at which the first slide shaft pushes the first rear link and the rotation center of the first rear link. Thus, in the case of a comparative example in which the first rear link is not movable in the front-rear direction and is rotatable, the distance between the portion at which the first slide shaft pushes the first rear link and the rotation center of the first rear link gradually decreases, as the first rear link rotates toward the first rising position. That is, in the case of the comparative example, it is necessary to increase the force with which the first slide shaft pushes the first rear link, as the first rear link rotates toward the first rising position.

**In** this respect, in the sunroof apparatus described above, the first rear link is movable in the front-rear direction and is rotatable. Thus, the first rear link rotates, while moving rearward, when being displaced from the first tilted-down position to the first rising position. Therefore, as the first rear link is displaced toward the first rising position, the distance between the portion at which the first slide shaft pushes the first rear link and the rotation center of the first rear link is less likely to be short. As a result, it is not necessary to increase the force with which the first slide shaft pushes the first rear link, as the first rear link is displaced toward the first rising position. Thus, in the sunroof apparatus, it is possible to reduce an increase in size of the actuator or reduce an increase in size of the first rear link.

Preferably, a portion, in the power transmission member (350), that transmits power to the first rear link (310) and a portion, in the first rear link (310), to which power is transmitted from the power transmission member (350) are adjacent to each other in the width direction, and a portion, in the first rear link (310), that transmits power to the second rear link (320) and a portion, in the second rear link (320), to which power is transmitted from the first rear link (310) are adjacent to each other in the width direction.

For example, in a case where the power transmission member and the first rear link are separated from each other in the width direction, efficiency in power transmission from the power transmission member to the first rear link is likely to decrease. In contrast, in the sunroof apparatus described above, the portions, related to power transmission, in the power transmission member and the first rear link are adjacent to each other in the width direction. Thus, in the sunroof apparatus, it is possible to prevent a decrease in efficiency in power transmission from the power transmission member to the first rear link. Likewise, in the sunroof apparatus, it is possible to prevent a decrease in efficiency in power transmission from the first rear link to the second rear link.

A rising angle of the second rear link (320) located at the second rising position with respect to the guide rail (60) is preferably close to perpendicular, as compared with a rising angle of the first rear link (310) located at the first rising position with respect to the guide rail (60).

In a case where a load in the up-down direction acts on the movable panel in a state where the movable panel is arranged at the tilt-up position, the load is transmitted to the second rear link supporting the movable panel. In the sunroof apparatus described above, in the state where the movable panel is arranged at the tilt-up position, the rising angle of the second rear link is an angle close to perpendicular, as compared with the rising angle of the first rear link. Thus, in a case where the load described above is transmitted to the second rear link, torque for causing the second rear link to rotate is less likely to be generated in the second rear link. As a result, in the sunroof apparatus, it is possible to reduce torque generated in the second rear link, when a load in the up-down direction acts on the movable panel arranged at the tilt-up position.

Preferably, an entire length of the first rear link (310) is longer than an entire length of the second rear link (320), and a rotation angle of the first rear link (310) from the first tilted-down position to the first rising position is smaller than a rotation angle of the second rear link (320) from the second tilted-down position to the second rising position.

The entire length of the first rear link is longer than the entire length of the second rear link. Thus, it is possible to keep the first slide groove of the first rear link away from the rotation center of the first rear link. As a result, when the movable panel is displaced from the fully-closing position to the tilt-up position, the distance between a portion at which the first slide shaft of the power transmission member pushes the first rear link and the rotation center of the first rear link is long. Therefore, in the sunroof apparatus, it is possible to increase efficiency in power transmission from the first slide shaft of the power transmission member to the first rear link.

In addition, the rotation angle of the first rear link from the first tilted-down position to the first rising position is smaller than the rotation angle of the second rear link from the second tilted-down position to the second rising position. Thus, even when the entire length of the first rear link is increased, the first rear link arranged at the first rising position hardly interferes with the movable panel arranged at the tilt-up position.

A front end of the first rear link (310) located at the first tilted-down position is preferably located frontward relative to a front end of the second rear link (320) located at the second tilted-down position.

When the vehicle is traveling, an upward load in accordance with the traveling speed of the vehicle acts on the movable panel. In a case where the movable panel is caused to perform the closing operation while the vehicle is traveling, the upward load acting on the movable panel is the largest when the movable panel moves in the vicinity of the fully-closing position. That is, when the movable panel moves in the vicinity of the fully-closing position, it is necessary to lower the movable panel on which the large upward load acts. In this respect, in the sunroof apparatus described above, a front end of the first rear link located at the first tilted-down position is located frontward relative to a front end of the second rear link located at the second tilted-down position. That is, it is possible to extend the first slide groove of the first rear link further frontward with respect to the rotation center of the first rear link. Thus, when the movable panel moves in the vicinity of the fully-closing position, the distance between the portion at which the first slide shaft of the power transmission member pushes the first rear link and the rotation center of the first rear link is likely to be long. Therefore, in the sunroof apparatus, it is possible to reduce the force with which the first slide shaft of the power transmission member pushes the first rear link, when the first rear link is displaced toward the first tilted-down position.

In a state where the first rear link (310) is located at the first tilted-down position and the second rear link (320) is located at the second tilted-down position, the first link support shaft (342) is preferably located rearward relative to the second link support shaft (343).

In the state where the first rear link is located at the first tilted-down position and the second rear link is located at the second tilted-down position, the relationship between the first rear link and the second rear link is as follows. That is, the rotation center of the first rear link is located rearward relative to the rotation center of the second rear link, while the front end of the first rear link is located frontward relative to the front end of the second rear link. Thus, when the movable panel moves in the vicinity of the fully-closing position, the distance between the portion at which the first slide shaft of the power transmission member pushes the first rear link and the rotation center of the first rear link is likely to be longer. Therefore, in the sunroof apparatus, it is possible to further reduce the force with which the first slide shaft of the power transmission member pushes the first rear link, when the first rear link is displaced toward the first tilted-down position.

Preferably, the first link support shaft (342) and the second link support shaft (343) that are projected onto a rear side at least partially overlap each other, as viewed in the width direction.

In a case where the first link support shaft projected onto the rear side does not overlap the second link support shaft, that is, in a case where a large positional misalignment exists between the position of the first link support shaft in the up-down direction and the position of the second link support shaft in the up-down direction, one of the first rear link and the second rear link is arranged to be misaligned with respect to the other in the up-down direction. As a result, the thickness of the apparatus in the up-down direction may increase. In contrast, in the sunroof apparatus described above, since the first link support shaft projected onto the rear side overlaps the second link support shaft, it is possible to reduce an increase in thickness of the apparatus in the up-down direction caused due to the positional relationship between the first rear link and the second rear link.

In a state where the movable panel (40) is arranged at the fully-closing position, the first rear link (310) is preferably located on a lower side of an upper edge of the guide rail (60).

In the sunroof apparatus, it is possible to reduce an increase in thickness of the apparatus in the up-down direction caused by the first rear link, in a case where the movable panel is arranged at the fully-closing position.

Preferably, the rear support part (300) includes a link support portion (330) supporting the first link support shaft (342) and the second link support shaft (343), and the link support portion (330) is fixed to the guide rail (60).

In the sunroof apparatus, it is possible to assemble the first link support shaft, the second link support shaft, the first rear link, and the second rear link to the link support portion, at the time of manufacturing the apparatus. In this case, by fixing the link support portion to the guide rail, the first link support shaft, the second link support shaft, the first rear link, and the second rear link are positioned with respect to the guide rail. In this manner, in the sunroof apparatus, it is possible to increase the manufacturing efficiency of the apparatus.

Preferably, the power transmission member (350) includes a transmission shaft (374) supporting the first rear link (410) rotatably about an axis of the transmission shaft (374) extending in the width direction, the transmission shaft (374) being configured to transmit power to the first rear link (410), the rear support part (400) includes a second link support shaft (443) that is a rotation shaft of the second rear link (420), the second link support shaft (443) having an axis whose extending direction is the width direction, and when the power transmission member (350) moves in the front-rear direction: the first rear link (410) is configured to rotate while the transmission shaft (374) is configured to move together with the power transmission member (350); and the second rear link (420) is configured to rotate while the second link support shaft (443) is configured not to move in a movement direction of the power transmission member (350).

A comparative example is assumed in which the second rear link supporting the rear end portion of the movable panel is movable in the front-rear direction and is rotatable. In this case, depending on a rotation direction and a movement direction of the second rear link, there is a possibility that an amount of movement of the movable panel in the front-rear direction between the fully-closing position and the tilt-up position increases. In this respect, in the sunroof apparatus of the present embodiment, since the second rear link is not movable in the front-rear direction, the amount of movement of the movable panel in the front-rear direction between the fully-closing position and the tilt-up position is less likely to increase. Therefore, when the sunroof apparatus of the present embodiment causes the movable panel to operate between the fully-closing position and the tilt-up position, the sunroof apparatus can cause the rear end portion of the movable panel to be lifted up and lowered while reducing the amount of movement of the movable panel in the front-rear direction. In addition, in the sunroof apparatus of the present embodiment, the transmission shaft that transmits the power from the power transmission member to the first rear link can have a function of rotatably supporting the first rear link.

The second link support shaft (443) is preferably located rearward relative to the transmission shaft (374).

In the sunroof apparatus, it is possible to arrange the second rear link supporting the movable panel in the vicinity of a rear end of the sunroof apparatus.

Preferably, a position of the second rear link (420) at which the movable panel (40) is arranged at the fully-closing position is a second tilted-down position and a position of the second rear link (420) at which the movable panel (40) is arranged at the tilt-up position is a second rising position, a position of the first rear link (410) at which the second rear link (420) is arranged at the second tilted-down position is a first tilted-down position and a position of the first rear link (410) at which the second rear link (420) is arranged at the second rising position is a first rising position, the rear support part (400) includes a third slide shaft (442) extending in the width direction and a link support portion (430) supporting the third slide shaft (442), the second rear link (420) includes a second slide shaft (441) extending in the width direction, the first rear link (410) has a second slide groove (412) on which the second slide shaft (441) slides and a third slide groove (413) on which the third slide shaft (442) slides, the first rear link (410) is configured to be displaced between the first tilted-down position and the first rising position based on power transmitted from the power transmission member (350) via the transmission shaft (374) and a force transmitted from the link support portion (430) via sliding of the third slide shaft (442) and the third slide groove (413), and the second rear link (420) is configured to be displaced between the second tilted-down position and the second rising position based on power transmitted from the first rear link (410) via sliding of the second slide shaft (441) and the second slide groove (412).

The first rear link has the second slide groove and the third slide groove, but each of the other components of the rear support part does not have a slide groove. That is, in the sunroof apparatus, since the two slide grooves can be collected in the first rear link, the other components of the rear support part can be simplified.

The sunroof apparatus (30; 30A to 30C) includes: a movable panel (40) configured to be displaced between a fully-closing position at which the movable panel (40) fully closes a roof opening (25) of a vehicle (10) and a tilt-up position at which a rear end portion of the movable panel (40) is lifted higher than the fully-closing position; a fixation bracket (70) fixed to the movable panel (40); a guide rail (60) extending in a front-rear direction of the vehicle (10); a rear support part (100) disposed at a position closer to a rear end than a front end of the guide rail (60), the rear support part (100) supporting the fixation bracket (70); and a power transmission member (200) configured to move in the front-rear direction along the guide rail (60). The rear support part (100) includes: a first rear link (110) configured to rotate about an axis extending in a width direction of the vehicle (10); and a second rear link (140) configured to move in the front-rear direction together with the power transmission member (200) and rotate about an axis extending in the width direction in a state of supporting the fixation bracket (70). One of the first rear link (110) and the second rear link (140) includes a slide shaft (147) extending in the width direction, and another one of the first rear link (110) and the second rear link (140) has a slide groove (134) on which the slide shaft (147) slides. The second rear link (140) is configured to displace the movable panel (40) based on power transmitted from the power transmission member (200) and power transmitted from the first rear link (110) via the slide shaft (147) and the slide groove (134).

In the sunroof apparatus, in a case where the movable panel is caused to operate, the power transmission member is driven. Then, the first rear link rotates based on the power transmitted from the power transmission member. In addition, the second rear link rotates, while moving in the front-rear direction, based on the power transmitted from the power transmission member and the power transmitted from the first rear link. Here, the first rear link is not a configuration fixed to the guide rail but a configuration that rotates with respect to the guide rail. That is, in the sunroof apparatus, it is possible to reduce the amount of upward protrusion of the first rear link with respect to the guide rail, in a case where the movable panel is arranged at the fully-closing position. In addition, in the sunroof apparatus, it is possible to increase the amount of upward protrusion of the first rear link with respect to the guide rail, in a case where the movable panel is arranged at the tilt-up position. Thus, in the sunroof apparatus, it is possible to reduce a thickness of the apparatus in the up-down direction, while securing the tilt-up amount of the movable panel.

### REFERENCE SIGNS LIST

10: Vehicle, 20: Vehicle body, 25: Roof opening, 30, 30A, 30B, 30C: Sunroof apparatus, 40: Movable panel, 60: Guide rail, 70: Fixation bracket, 80: Drive shoe, 100, 300, 400, 500: Rear support part, 110, 310, 410, 510: First rear link, 120: Covering portion, 111a: Base portion, 121: First rib, 122: Second rib, 123, 342, 542: First link support shaft, 125: Engagement recess portion, 131, 311, 511: First slide groove, 134, 412: Second slide groove (slide groove), 134a: Lateral groove, 134b: Upright groove, 140, 320, 420, 520: Second rear link, 144, 145, 343, 443, 543: Second link support shaft, 147, 441: Second slide shaft (slide shaft), 148: Engagement protrusion portion, 150, 330, 430, 530: Link support portion, 200, 350: Power transmission member, 223, 372: Holding wall, 225, 373: First slide shaft, 226: First recess portion (recess portion), 227: Second recess portion (recess portion), 374: Transmission shaft, 442: Third slide shaft, and 331b, 413, 531: Third slide groove

## Claims

1. A sunroof apparatus comprising:
a movable panel configured to be displaced between a fully-closing position at which the movable panel fully closes a roof opening of a vehicle and a tilt-up position at which a rear end portion of the movable panel is lifted higher than the fully-closing position;
a guide rail extending in a front-rear direction of the vehicle;
a rear support part disposed at a position closer to a rear end than a front end of the guide rail, the rear support part supporting the movable panel; and
a power transmission member configured to move in the front-rear direction along the guide rail,
wherein
the rear support part includes:
a first rear link configured to rotate about an axis extending in a width direction of the vehicle; and
a second rear link configured to rotate about an axis extending in the width direction in a state of supporting the movable panel,
the first rear link is configured to rotate based on power transmitted from the power transmission member, and
the second rear link is configured to displace the movable panel by rotating in accordance with rotation of the first rear link.

2. The sunroof apparatus according to claim 1, wherein when the power transmission member moves in the front-rear direction, at least one of the first rear link or the second rear link is configured to rotate, while moving in a movement direction of the power transmission member.

3. The sunroof apparatus according to claim 2, wherein
the rear support part includes:
a first link support shaft that is a rotation shaft of the first rear link, the first link support shaft having an axis whose extending direction is the width direction; and
a second link support shaft that is a rotation shaft of the second rear link, the second link support shaft having an axis whose extending direction is the width direction, the second link support shaft being arranged frontward relative to the first link support shaft, and
when the power transmission member moves in the front-rear direction:
the first rear link is configured to rotate while the first link support shaft is configured not to move in a movement direction of the power transmission member; and
the second rear link is configured to rotate while the second link support shaft is configured to move in a movement direction of the power transmission member.

4. The sunroof apparatus according to claim 3, wherein
a position of the second rear link at which the movable panel is arranged at the fully-closing position is a second tilted-down position, and a position of the second rear link at which the movable panel is arranged at the tilt-up position is a second rising position,
a position of the first rear link at which the second rear link is arranged at the second tilted-down position is a first tilted-down position, and a position of the first rear link at which the second rear link is arranged at the second rising position is a first rising position,
one of the first rear link and the second rear link includes a slide shaft extending in the width direction, and another one of the first rear link and the second rear link has a slide groove on which the slide shaft slides,
the first rear link is configured to be displaced between the first tilted-down position and the first rising position based on power transmitted from the power transmission member, and
the second rear link is configured to be displaced between the second tilted-down position and the second rising position based on power transmitted from the power transmission member and power transmitted from the first rear link via sliding of the slide shaft and the slide groove.

5. The sunroof apparatus according to claim 4, wherein
the slide shaft is a second slide shaft, and the slide groove is a second slide groove,
the power transmission member includes a first slide shaft extending in the width direction,
the first rear link has a first slide groove on which the first slide shaft slides, and
the first rear link is configured to be displaced between the first tilted-down position and the first rising position based on power transmitted from the power transmission member via sliding of the first slide shaft and the first slide groove.

6. The sunroof apparatus according to claim 5, wherein
a portion, in the power transmission member, that transmits power to the first rear link and a portion, in the first rear link, to which power is transmitted from the power transmission member are adjacent to each other in the width direction,
a portion, in the power transmission member, that transmits power to the second rear link and a portion, in the second rear link, to which power is transmitted from the power transmission member are adjacent to each other in the width direction, and
a portion, in the first rear link, that transmits power to the second rear link and a portion, in the second rear link, to which power is transmitted from the first rear link are adjacent to each other in the width direction.

7. The sunroof apparatus according to claim 5, wherein a rising angle of the second rear link located at the second rising position with respect to the guide rail is close to perpendicular, as compared with a rising angle of the first rear link located at the first rising position with respect to the guide rail.

8. The sunroof apparatus according to claim 5 or 7, wherein
an entire length of the first rear link is longer than an entire length of the second rear link, and
a rotation angle of the first rear link from the first tilted-down position to the first rising position is smaller than a rotation angle of the second rear link from the second tilted-down position to the second rising position.

9. The sunroof apparatus according to claim 5, wherein
the first rear link includes:
a base portion made of a metal material; and
a covering portion made of a resin material, the covering portion covering the base portion,
the second rear link includes the second slide shaft, and
the covering portion of the first rear link includes:
a first rib extending in the width direction from the base portion to define the first slide groove; and
a second rib extending in a direction opposite to the first rib from the base portion to define the second slide groove.

10. The sunroof apparatus according to claim 9, wherein
the power transmission member includes a holding wall holding the first slide shaft,
the first rear link is arranged between the holding wall of the power transmission member and the second rear link in the width direction, and
in the first rear link, the first rib extends toward the holding wall, and the second rib extends toward the second rear link.

11. The sunroof apparatus according to claim 9, wherein
the first rear link has a bar shape,
an axis of the first link support shaft passes through a proximal end portion of the first rear link in the width direction,
the second slide groove has:
a lateral groove extending from a distal end portion toward a proximal end portion of the first rear link; and
an upright groove extending in an intersecting direction that is a direction intersecting with the lateral groove, from an end portion, of both end portions of the lateral groove, close to an axis of the first link support shaft, and
in a state where the first rear link is arranged at the first rising position and the second rear link is arranged at the second rising position, the upright groove extends upward from an end portion of the lateral groove close to a rotation axis of the first rear link, and the second slide shaft of the second rear link is located in the upright groove.

12. The sunroof apparatus according to claim 11, wherein in the first rear link, the upright groove penetrates the second rib in the intersecting direction.

13. The sunroof apparatus according to any one of claims 9 to 12, wherein
one of the first rear link and the second rear link has an engagement protrusion portion,
the other one of the first rear link and the second rear link has an engagement recess portion, and
in a case where the first rear link is located at the first rising position and the second rear link is located at the second rising position, the engagement protrusion portion is fitted into the engagement recess portion.

14. The sunroof apparatus according to claim 3, wherein in a state where the movable panel is arranged at the fully-closing position, the first rear link is located on a lower side of an upper edge of the guide rail.

15. The sunroof apparatus according to claim 3 or 14, wherein a rotation axis of the first rear link is located below an upper edge of the guide rail and above a lower edge of the guide rail, as viewed in the width direction.

16. The sunroof apparatus according to claim 2, wherein
the rear support part includes:
a first link support shaft that is a rotation shaft of the first rear link, the first link support shaft having an axis whose extending direction is the width direction; and
a second link support shaft that is a rotation shaft of the second rear link, the second link support shaft having an axis whose extending direction is the width direction, and
when the power transmission member moves in the front-rear direction:
the first rear link is configured to rotate while the first link support shaft is configured to move in a movement direction of the power transmission member; and
the second rear link is configured to rotate while the second link support shaft is configured to move in a movement direction of the power transmission member.

17. The sunroof apparatus according to claim 3 or 16, wherein
the power transmission member has a recess portion recessed upward, and
the second link support shaft is sandwiched in an up-down direction between the recess portion of the power transmission member and the guide rail.

18. The sunroof apparatus according to claim 2, wherein
the rear support part includes:
a first link support shaft that is a rotation shaft of the first rear link, the first link support shaft having an axis whose extending direction is the width direction; and
a second link support shaft that is a rotation shaft of the second rear link, the second link support shaft having an axis whose extending direction is the width direction, and
when the power transmission member moves in the front-rear direction:
the first rear link is configured to rotate while the first link support shaft is configured to move in a movement direction of the power transmission member; and
the second rear link is configured to rotate while the second link support shaft is configured not to move in a movement direction of the power transmission member.

19. The sunroof apparatus according to claim 18, wherein
a position of the second rear link at which the movable panel is arranged at the fully-closing position is a second tilted-down position, and a position of the second rear link at which the movable panel is arranged at the tilt-up position is a second rising position,
a position of the first rear link at which the second rear link is arranged at the second tilted-down position is a first tilted-down position, and a position of the first rear link at which the second rear link is arranged at the second rising position is a first rising position,
the power transmission member includes a first slide shaft extending in the width direction,
the first rear link has a first slide groove on which the first slide shaft slides, the first rear link is configured to be displaced between the first tilted-down position and the first rising position based on power transmitted from the power transmission member via sliding of the first slide shaft and the first slide groove, and
the second rear link is configured to be displaced between the second tilted-down position and the second rising position based on power transmitted from the first rear link.

20. The sunroof apparatus according to claim 19, wherein
a portion, in the power transmission member, that transmits power to the first rear link and a portion, in the first rear link, to which power is transmitted from the power transmission member are adjacent to each other in the width direction, and
a portion, in the first rear link, that transmits power to the second rear link and a portion, in the second rear link, to which power is transmitted from the first rear link are adjacent to each other in the width direction.

21. The sunroof apparatus according to claim 19, wherein a rising angle of the second rear link located at the second rising position with respect to the guide rail is close to perpendicular, as compared with a rising angle of the first rear link located at the first rising position with respect to the guide rail.

22. The sunroof apparatus according to claim 19 or 21, wherein
an entire length of the first rear link is longer than an entire length of the second rear link, and
a rotation angle of the first rear link from the first tilted-down position to the first rising position is smaller than a rotation angle of the second rear link from the second tilted-down position to the second rising position.

23. The sunroof apparatus according to claim 19, wherein a front end of the first rear link located at the first tilted-down position is located frontward relative to a front end of the second rear link located at the second tilted-down position.

24. The sunroof apparatus according to claim 23, wherein in a state where the first rear link is located at the first tilted-down position and the second rear link is located at the second tilted-down position, the first link support shaft is located rearward relative to the second link support shaft.

25. The sunroof apparatus according to claim 18 or 24, wherein the first link support shaft and the second link support shaft that are projected onto a rear side at least partially overlap each other, as viewed in the width direction.

26. The sunroof apparatus according to claim 18, wherein in a state where the movable panel is arranged at the fully-closing position, the first rear link is located on a lower side of an upper edge of the guide rail.

27. The sunroof apparatus according to claim 18 or 26, wherein
the rear support part includes a link support portion supporting the first link support shaft and the second link support shaft, and
the link support portion is fixed to the guide rail.

28. The sunroof apparatus according to claim 2, wherein
the power transmission member includes a transmission shaft supporting the first rear link rotatably about an axis of the transmission shaft extending in the width direction, the transmission shaft being configured to transmit power to the first rear link,
the rear support part includes a second link support shaft that is a rotation shaft of the second rear link, the second link support shaft having an axis whose extending direction is the width direction, and
when the power transmission member moves in the front-rear direction:
the first rear link is configured to rotate while the transmission shaft is configured to move together with the power transmission member; and
the second rear link is configured to rotate while the second link support shaft is configured not to move in a movement direction of the power transmission member.

29. The sunroof apparatus according to claim 28, wherein the second link support shaft is located rearward relative to the transmission shaft.

30. The sunroof apparatus according to claim 28 or 29, wherein
a position of the second rear link at which the movable panel is arranged at the fully-closing position is a second tilted-down position, and a position of the second rear link at which the movable panel is arranged at the tilt-up position is a second rising position,
a position of the first rear link at which the second rear link is arranged at the second tilted-down position is a first tilted-down position, and a position of the first rear link at which the second rear link is arranged at the second rising position is a first rising position,
the rear support part includes a third slide shaft extending in the width direction and a link support portion supporting the third slide shaft,
the second rear link includes a second slide shaft extending in the width direction,
the first rear link has a second slide groove on which the second slide shaft slides and a third slide groove on which the third slide shaft slides,
the first rear link is configured to be displaced between the first tilted-down position and the first rising position based on power transmitted from the power transmission member via the transmission shaft and a force transmitted from the link support portion via sliding of the third slide shaft and the third slide groove, and
the second rear link is configured to be displaced between the second tilted-down position and the second rising position based on power transmitted from the first rear link via sliding of the second slide shaft and the second slide groove.
